# EUROPEAN PATENT APPLICATION

(11) **EP 4 772 674 A1**
(43) Date of publication of application: **08.07.2026**
(21) Application number: 24859521.7
(22) Date of filing: 19.08.2024
(51) Int. Cl.: C23F 13/10, C22C 18/04, C22C 30/06, C23C 2/06, C23C 2/26, C23F 13/02

(54) **SURFACE-TREATED MEMBER AND COMPOSITE STRUCTURE**

(30) Priority: 31.08.2023 JP 2023141500
(71) Applicant: Nippon Steel Corporation, Tokyo 100-8071 (JP)
(72) Inventor: KATAYAMA, Masaki, Tokyo 100-8071 (JP); SHIMIZU, Atsuo, Tokyo 100-8071 (JP); SHOJI, Hiromasa, Tokyo 100-8071 (JP)
(74) Representative: Vossius & Partner Patentanwälte Rechtsanwälte mbB
(86) International application number: PCT/JP2024/029332
(87) International publication number: WO 2025/047488

(57) **Abstract**

[SUMMARY]

[PROBLEM] To provide a surface-treated member using a zinc-based plated steel material capable of exhibiting excellent corrosion resistance even in concrete.

[SOLUTION] In a surface-treated member of the present invention, an exposure region having a base steel exposure portion is present in at least part of a zinc-based plating layer, and when each cross section obtained by cutting the exposure region in a thickness direction of a steel material is observed with a microscope, a length in a width direction, of each of the base steel exposure portions present is within a range of 1 to 100 µm, the number of the base steel exposure portions present per unit length is within a range of 3 to 20/mm, and a total length in the width direction, of the base steel exposure portions per unit length is 600 µm/mm or less. Further, a total area of regions each giving a cross section where the total length in the width direction, of the base steel exposure portions, per unit length is 600 µm/mm or less in a plan view from above is 0.7% or more of a surface area of the steel material in a plan view.

## Description

### TECHNICAL FIELD

The present invention relates to a surface-treated member and a composite structure.

### BACKGROUND ART

Zinc-based plated steel materials in which various types of zinc-based plating layers are provided as surface-treating layers on the surfaces of steel materials serving as substrates are materials widely used in the fields of construction, automobiles, and the like from the viewpoint of improving corrosion resistance of structure members. The zinc-based plated steel materials as the materials are processed into various shapes and thereafter joined as required by a joining process using fastening members such as screws, bolts, or rivets, various welding methods, and so on, to be a surface-treated member having a desired shape.

The above-mentioned surface-treated member is expected to be exposed to corrosive environments, which vary depending on the use of the surface-treated member. Therefore, regarding the corrosion resistance of a surface-treated steel material serving as its material, various studies have conventionally been conducted.

For example, Patent Document 1 below proposes surface-treated steel including a coating film containing zinc or an alloy mainly composed of zinc and a predetermined amount of at least either Mg or In for the purpose of achieving excellent corrosion resistance in various corrosive environments such as alkaline corrosive environments, seawater corrosive environments, city water corrosive environments, high-temperature wetting corrosive environments, soil corrosive environments, and air corrosive environments. In Patent Document 1 mentioned above, corrosion resistance in various corrosive environments is studied using an excellent sacrificial anti-corrosion effect that zinc has.

### PRIOR ART DOCUMENT

### PATENT DOCUMENT

Patent Document 1: Japanese Laid-open Patent Publication No. H11-158657

### SUMMARY OF THE INVENTION

### PROBLEMS TO BE SOLVED BY THE INVENTION

It is supposed that, when a surface-treated member is installed at a desired place, at least part thereof is often embedded in concrete. In a surface-treated member, as for its part exposed to the atmosphere, it is easy to examine the corrosion state by checking the exposed part visually. However, as for its part embedded in the concrete, it is difficult to examine the corrosion state by visual check, unlike in the atmosphere, and it is also difficult to perform maintenance on a corroded part. Accordingly, high corrosion resistance is required for a surface-treated member used in concrete.

The present inventors have studied the corrosion states of zinc-based plated steel materials in concrete. As a result, it has been found that, even if a surface-treated member is manufactured using, as its material, the surface-treated steel as disclosed in the above-mentioned Patent Document 1, there is still room for improvement in its corrosion resistance when it is in concrete.

Therefore, the present invention has been made in consideration of the above-mentioned problem, and it is an object of the present invention to provide a surface-treated member using a zinc-based plated steel material, that is capable of exhibiting excellent corrosion resistance even in concrete, and a composite structure in which such a surface-treated member and concrete are combined.

### MEANS FOR SOLVING THE PROBLEMS

As a result of earnest studies for solving the above problems, the present inventors came up with the idea of changing the state of a zinc-based plating layer provided as a surface-treating layer, according to a corrosive environment such as the atmosphere or concrete to which it is exposed. As a result of further studies based on such an idea, the present inventors have conceived a surface-treated member and a composite structure described below.

The following is the gist of the present invention completed based on such an idea.

(1) A surface-treated member made of a surface-treated steel material having: a steel material as a base metal; and a zinc-based plating layer located on a surface of the steel material, wherein: an exposure region having a base steel exposure portion, which is a portion where the surface of the steel material is exposed, is present in at least part of the zinc-based plating layer; in a case where an arbitrary portion with a dimension of 1.5 mm × 2.0 mm is observed with a microscope in each cross section obtained by cutting the exposure region in a thickness direction of the steel material according to a shape of the base steel exposure portion in a plan view from above the zinc-based plating layer, in the field of view, let a portion where a surface of the zinc-based plating layer is present with a 0.5 mm length or more along a width direction, which is a direction orthogonal to the thickness direction of the steel material, be referred to as a plating residual portion, and let a region including the base steel exposure portion, located between the two adjacent plating residual portions be defined as a region A, then in the region A, a length in the width direction, of each of the base steel exposure portions present is within a range of 1.0 to 100.0 µm, the number of the base steel exposure portions present per unit length in the width direction is within a range of 3.0 to 20.0/mm, and a total length in the width direction, of the base steel exposure portions per unit length in the width direction is 600.0 µm/mm or less; and in the exposure region, let a region giving a cross section where the total length in the width direction, of the base steel exposure portions per unit length in the width direction is 600.0 µm/mm or less when the cross section is observed with the microscope be defined as a region B, then a total area of the regions B in a plan view from above is 0.7% or more of a surface area of the steel material in a plan view.
(2) The surface-treated member according to (1), wherein the exposure region is at least partly embedded in concrete when the surface-treated member is used.
(3) The surface-treated member according to (1), wherein: the base steel exposure portion is identified by executing a color reaction test causing a color reaction at a portion where a base steel is exposed, across the whole surface of the zinc-based plating layer; and the identified base steel exposure portions are each virtually segmented into unit segments each being a rectangular region having 5 mm short sides or more and a 1 cm² area when the identified base steel exposure portions are each seen in a plan view from above the zinc-based plating layer, and regarding segments in each of which an area ratio of the base steel exposure portion occupying the rectangular region is 3% or more, the cross section of each of the segments is observed on a segment-by-segment basis.
(4) The surface-treated member according to any one of (1) to (3), wherein the zinc-based plating layer is a plating layer having a chemical composition containing, in mass%, A1: 0.10% or more and less than 40.00% and Mg: 0.10% or more and less than 15.00%, with the balance consisting of Zn and impurities.
(5) The surface-treated member according to (4), wherein the zinc-based plating layer is a plating layer containing, in mass%, A1: 0.10% or more and less than 40.00%, Mg: 0.10% or more and less than 15.00%, and Zn: 60.00% or more.
(6) The surface-treated member according to any one of (1) to (3), wherein the zinc-based plating layer is a plating layer having a chemical composition containing, in mass%, A1: 0.01% or more and less than 40.00% and Mg: 0.10% or more and less than 15.00%, and further containing one or two or more selected from a group consisting of the following element group A, element group B, element group C, element group D, element group E, and element group F, with the balance consisting of Zn and impurities.
   [element group A]: one or two selected from a group consisting of Si: 2.50% or less and Fe: 5.00% or less
   [element group B]: one or two or more selected from a group consisting of Sb: less than 0.50%, Pb: less than 0.50%, and Sr: less than 0.50%
   [element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
   [element group D]: one or two or more selected from a group consisting of Sn: 20.00% or less, Bi: less than 5.00%, and In: less than 2.00%
   [element group E]: one or two or more selected from a group consisting of Ca: 3.00% or less, La: less than 0.50%, Ce: less than 0.50%, and Y: 0.50% or less
   [element group F]: B: less than 0.50%.
(7) The surface-treated member according to (6), containing the element group A.
(8) The surface-treated member according to (6), containing the element group B.
(9) The surface-treated member according to (6), containing the element group C.
(10) The surface-treated member according to (6), containing the element group D.
(11) The surface-treated member according to (6), containing the element group E.
(12) The surface-treated member according to (6), containing the element group F.
(13) The surface-treated member according to (6), wherein the zinc-based plating layer is a plating layer containing, in mass%, at least Al: 4.0% or more and less than 25.0% and Mg: 0.3% or more and less than 12.5%.
(14) A composite structure of a surface-treated member and concrete, the surface-treated member being made of a surface-treated steel material having a steel material as a base metal and a zinc-based plating layer located on a surface of the steel material, wherein: an exposure region having a base steel exposure portion, which is a portion where the surface of the steel material is exposed, is present in at least part of the zinc-based plating layer, and at least part of the exposure region is in contact with the concrete; in a case where an arbitrary portion with a dimension of 1.5 mm × 2.0 mm is observed with a microscope in each cross section obtained by cutting the exposure region in a thickness direction of the steel material according to a shape of the base steel exposure portion in a plan view from above the zinc-based plating layer, in the field of view, let a portion where a surface of the zinc-based plating layer is present with a 0.5 mm length or more along a width direction, which is a direction orthogonal to the thickness direction of the steel material, be referred to as a plating residual portion, and let a region including the base steel exposure portion, located between the two adjacent plating residual portions be defined as a region A, then in the region A, a length in the width direction, of each of the base steel exposure portions present is within a range of 1.0 to 100.0 µm, the number of the base steel exposure portions present per unit length in the width direction is within a range of 3.0 to 20.0/mm, and a total length in the width direction, of the base steel exposure portions per unit length in the width direction is 600.0 µm/mm or less; and in the exposure region, let a region giving a cross section where the total length in the width direction, of the base steel exposure portions per unit length in the width direction is 600.0 µm/mm or less when the cross section is observed with the microscope be defined as a region B, then a total area of the regions B in a plan view from above is 0.7% or more of a surface area of the steel material in a plan view.
(15) The composite structure according to (14), wherein, in the exposure region in contact with the concrete, an Fe-Zn-Ca-based composite layer containing Fe, Zn, and Ca is present in at least part of an interface between the zinc-based plating layer and the concrete or an interface between the steel material and the concrete.
(16) The composite structure according to (15), wherein the Fe-Zn-Ca-based composite layer is a layer having a chemical composition containing, in mass%, Fe: 1.0% or more and 20.0% or less, Zn: 10.0% or more and 40.0% or less, and Ca: 5.0% or more and 15.0% or less, with the balance consisting of H, C, O, and impurities.
(17) The composite structure according to (16), wherein the zinc-based plating layer further contains Al and Mg as the chemical composition; and in place of part of H, C, and O in the balance, the chemical composition of the Fe-Zn-Ca-based composite layer further contains at least one of A1: 0% or more and 10.0% or less and Mg: 0% or more and 10.0% or less.
(18) The composite structure according to (14), wherein: the base steel exposure portion is identified by executing a color reaction test causing a color reaction at a portion where a base steel is exposed, across the whole surface of the zinc-based plating layer; and the identified base steel exposure portions are each virtually segmented into unit segments each being a rectangular region having 5 mm short sides or more and a 1 cm² area when the identified base steel exposure portions are each seen in a plan view from above the zinc-based plating layer, and regarding segments in each of which an area ratio of the base steel exposure portion occupying the rectangular region is 3% or more, the cross section of each of the segments is observed on a segment-by-segment basis.
(19) The composite structure according to any one of (14) to (18), wherein the zinc-based plating layer is a plating layer having a chemical composition containing, in mass%, A1: 0.10% or more and less than 40.00% and Mg: 0.10% or more and less than 15.00%, with the balance consisting of Zn and impurities.
(20) The composite structure according to (19), wherein the zinc-based plating layer is a plating layer containing, in mass%, A1: 0.10% or more and less than 40.00%, Mg: 0.10% or more and less than 15.00%, and Zn: 60.00% or more.
(21) The composite structure according to any one of (14) to (18), wherein the zinc-based plating layer is a plating layer having a chemical composition containing, in mass%, A1: 0.10% or more and less than 40.00% and Mg: 0.10% or more and less than 15.00%, and further containing one or two or more selected from a group consisting of the following element group A, element group B, element group C, element group D, element group E, and element group F, with the balance consisting of Zn and impurities.
   [element group A]: one or two selected from a group consisting of Si: 2.50% or less and Fe: 5.00% or less
   [element group B]: one or two or more selected from a group consisting of Sb: less than 0.50%, Pb: less than 0.50%, and Sr: less than 0.50%
   [element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
   [element group D]: one or two or more selected from a group consisting of Sn: 20.00% or less, Bi: less than 5.00%, and In: less than 2.00%
   [element group E]: one or two or more selected from a group consisting of Ca: 3.00% or less, La: less than 0.50%, Ce: less than 0.50%, and Y: 0.50% or less
   [element group F]: B: less than 0.50%
(22) The composite structure according to (21), containing the element group A.
(23) The composite structure according to (21), containing the element group B.
(24) The composite structure according to (21), containing the element group C.
(25) The composite structure according to (21), containing the element group D.
(26) The composite structure according to (21), containing the element group E.
(27) The composite structure according to (21), containing the element group F.
(28) The composite structure according to (21), wherein the zinc-based plating layer is a plating layer containing, in mass%, at least Al: 4.0% or more and less than 25.0% and Mg: 0.3% or more and less than 12.5%.

### EFFECT OF THE INVENTION

As described above, according to the present invention, it is possible to provide a surface-treated member using a zinc-based plated steel material, that is capable of exhibiting excellent corrosion resistance even in concrete, and a composite structure composed of such a surface-treated member and concrete.

### BRIEF DESCRIPTION OF THE DRAWINGS

FIG. 1 is a schematic view for explaining a structure installed on the surface of concrete.
FIG. 2 is a schematic view for explaining the structure of a surface-treated member according to an embodiment of the present invention.
FIG. 3 is a schematic view for explaining the structure of the surface-treated member according to the embodiment.
FIG. 4 is a schematic view for explaining the structure of the surface-treated member according to the embodiment.
FIG. 5 is an explanatory view for explaining base steel exposure portions in the surface-treated member according to the embodiment.
FIG. 6 is an explanatory view for explaining a region A stipulated in the surface-treated member according to the embodiment.
FIG. 7 is an explanatory view for explaining the base steel exposure portions in the surface-treated member according to the embodiment.
FIG. 8 is a schematic view for explaining the structure of a composite structure according to the embodiment.
FIG. 9 is a schematic view for explaining the structure of the composite structure according to the embodiment.

### EMBODIMENTS FOR CARRYING OUT INVENTION

Hereinafter, preferred embodiments of the present invention will be described in detail while referring to the accompanying drawings. Note that in the present description and the drawings, components having substantially the same functional configurations are denoted by the same codes, and redundant descriptions thereof will be omitted.

### (Corrosion Behavior in Concrete)

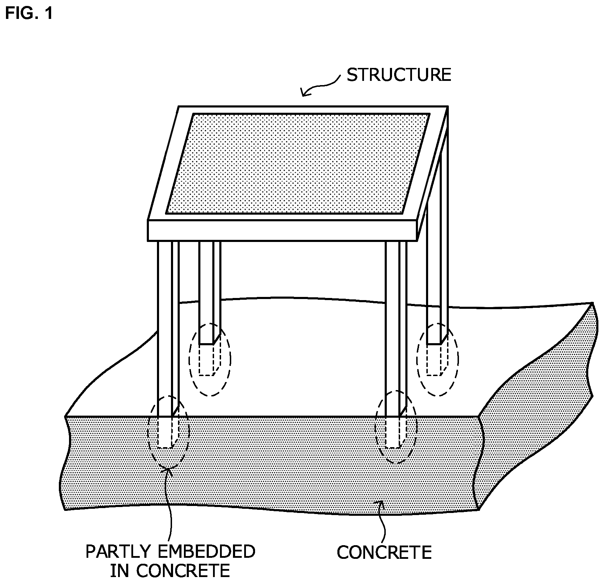

Before a surface-treated member according to an embodiment of the present invention is described, a corrosion behavior in concrete, which the present inventors have found, will be described with reference to FIG. 1. FIG. 1 is a schematic view for explaining a structure installed on the surface of concrete.

As schematically illustrated in FIG. 1, any of various structures, for example, a rack on which a solar power panel is mounted, a road sign, a guardrail, and a traffic light, is installed on the surface of concrete serving as a foundation. At this time, for the stabler installation of the structure on the concrete surface, parts of the structure (for example, parts surrounded by the broken lines in FIG. 1, such as parts near lower ends of pillars) are often embedded in the concrete as illustrated in FIG. 1.

Here, as materials of various structures, various types of steel materials are often used from the viewpoint of production cost and the like, for instance. Here, in the case where the structures using various types of steel materials as their materials are partly embedded in concrete, there is a concern that the steel materials as the materials may corrode because the inside of the concrete is a strongly alkaline environment.

In the case where a steel material without any of various types of plating applied thereto is used as the material of a structure, it is known that, under an alkaline environment such as the inside of concrete, a passive film is formed on the surface of the unplated steel material and it exhibits high corrosion resistance. On the other hand, in the unplated steel material, a part where the steel material is exposed has poor corrosion resistance under an environment, such as the atmosphere, that is a neutral environment but has a corrosive factor such as moisture.

Further, if chloride ions (Cl⁻ ions) permeate the concrete or if the concrete becomes neutral, the formed passive film disappears and even a part present in the concrete becomes poor in corrosion resistance. Further, since the chloride ions (Cl⁻ ions) work as a corrosion factor for the steel material exposed to the atmosphere or the like, the corrosion resistance of the part where the steel material is exposed becomes insufficient.

As described above, in the case where a steel material without any of various types of plating applied is used as the material of a structure, it can be said that there is still room for consideration in view of corrosion resistance (in particular, in view of corrosion resistance when it is exposed to chloride ions).

On the other hand, if the material of a structure is a zinc-based plated steel material, which is a material having excellent corrosion resistance in the atmosphere being a neutral environment, and having excellent corrosion resistance even if chloride ions adhere to it in the atmosphere, it can be said that there is a prospect for a solution regarding the retention of the corrosion resistance of the structure in the atmosphere.

Further, it is known that, when a zinc-based plated steel material is embedded in concrete, a Ca-Zn-based reaction layer is formed in an interface between the zinc-based plating and the concrete to improve the corrosion resistance in the concrete, which is alkaline. Therefore, it seems at first that the use of a zinc-based plated steel material as the material of a structure that is partly embedded in concrete gives a prospect for a solution in view of retaining the corrosion resistance of the structure in concrete and the atmosphere. However, it is known that, if chloride ions permeate the concrete, the protective ability of the above Ca-Zn-based reaction layer is lost. Therefore, even if a zinc-based plated steel material is used as the material of a structure, there has still been room for improvement in view of the corrosion resistance of the structure in concrete.

The present inventors have studied the corrosion behavior of a Ca-Zn-based reaction layer in concrete with the aim of studying the corrosion behavior of a zinc-based plated steel material in concrete. In detail, in concrete permeated by chloride ions, the state of the Ca-Zn-based reaction layer generated on the surface of a zinc-based plating layer was observed using SEM (Scanning Electron Microscope) or the like. As a result, it has been found that the Ca-Zn-based reaction layer exposed to the chloride ions is porous.

From the above findings, the present inventors could obtain the finding that, to improve the corrosion resistance of the zinc-based plated steel material in concrete, it is important to change the Ca-Zn-based reaction layer formed on the zinc-based plating layer in the concrete into a layer made of a product produced in a dense state.

As a result of conducting further studies with the aim of obtaining a layer made of a product produced in a dense state in concrete, the present inventors have come up with the idea, which is different from the conventional technical idea, of intentionally providing portions where the surface of the steel material is exposed (hereinafter, referred to as "base steel exposure portions" in part of a zinc-based plating layer such that they are present at a specific proportion. This makes it possible to form a composite layer made of a product in a dense state, on the surface of the zinc-based plating layer even in concrete.

In the conventional technical idea, a zinc-based plating layer is provided in a dense state to prevent the exposure of base steel as much as possible and then protect the base steel using a sacrificial anti-corrosive effect exhibited by zinc. However, the present inventors have found that, by intentionally providing portions where base steel is exposed in a zinc-based plating layer, it is possible to generate a dense composite layer starting from the exposure portions. Such a composite layer protects the base steel and the nearby zinc-based plating layer.

In more detail, owing to the presence of the base steel exposure portions in the concrete, the zinc-based plating layer and the base steel are both exposed to various components composing the concrete. Consequently, Zn ions elute from the zinc-based plating layer, and Fe ions elute from the base steel. In the atmosphere, the eluted Zn ions and Fe ions are washed away by rain and the like and scarcely adhere to the exposure portions. On the other hand, in concrete, there is no such water flow. This is considered to be a reason why the eluted Zn ions and Fe ions easily adhere to the base steel exposure portions, and a dense Fe-Zn-Ca-based composite oxide is generated on the base steel exposure portions.

Further, as a result of the studies by the present inventors, it has been made clear that, in the case where the zinc-based plating layer is an alloy plating layer containing Mg and Al in addition to Zn, Mg ions and Al ions in addition to Zn ions elute in concrete. It has become clear that this elution results in the generation of an Fe-Zn-Al-Mg-Ca-based composite oxide to further improve corrosion resistance.

As a result of further studies based on the above-described findings, the present inventors have conceived a surface-treated member and a composite structure according to an embodiment of the present invention, as will be described in detail below.

### (Regarding Surface-treated Member)

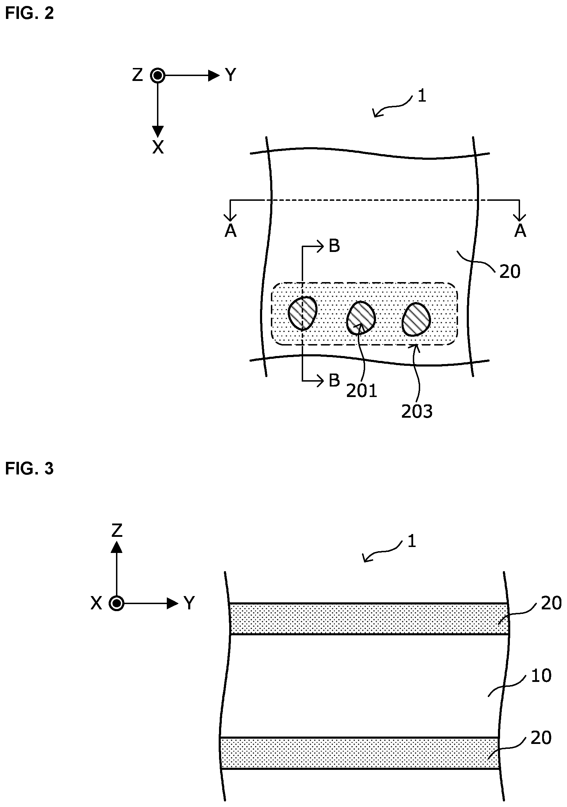

The following will describe the surface-treated member according to the embodiment of the present invention in detail with reference to FIG. 2 to FIG. 4. FIG. 2 to FIG. 4 are schematic views for explaining the structure of the surface-treated member according to this embodiment. Further, in the description with reference to FIG. 2 to FIG. 4, the coordinate axes illustrated in the drawings are used for convenience' sake.

The surface-treated member according to this embodiment is formed using, as its material, a surface-treated steel material having zinc-based plating layers, as will be described in detail below. Here, a specific structure of the surface-treated member according to this embodiment is not particularly limited. The specific structure of the surface-treated member according to this embodiment may be, for example, a box-shaped one or may be a plate-shaped one using a plate-shaped steel material, such as a roof or a wall of a building. Further, the specific structure of the surface-treated member according to this embodiment may be, for example, a molded body or a joined body using various types of shaped steel, such as a rack of a solar power panel, may be a molded body or a joined body using various types of H-shaped steel or square pillars, such as a framework of a structure, or may be a molded body or a joined body using various types of steel pipes, such as various types of pillars, signs, traffic signals, and guardrails.

FIG. 2 schematically illustrates a state of part of the surface-treated member according to this embodiment in a plan view from above its surface (Z-axis direction in the drawing). As schematically illustrated in FIG. 2, the surface-treated member 1 according to this embodiment uses, as its material, a zinc-based plated steel sheet in which a zinc-based plating layer 20 is provided on the surface of a steel sheet serving as a base metal, and in at least part of its surface (an XY plane in FIG. 2, corresponding to the surface of the zinc-based plating layer 20), there is an exposure region 203 having base steel exposure portions 201, which are portions where the surface of the steel material is exposed, as will be described later.

Here, in FIG. 2, the whole exposure region 203 having the base steel exposure portions 201 is schematically illustrated as a substantially rectangular shape. However, in the surface-treated member 1 according to this embodiment, the specific shapes of the base steel exposure portions 201 and the exposure region 203 are not limited to the shapes illustrated in FIG. 2.

FIG. 3 schematically illustrates a cross section of the surface-treated member 1 illustrated in FIG. 2 cut in the Z-axis direction along the A-A cutting line. The sectional view illustrated in FIG. 3 corresponds to a portion without the base steel exposure portions 201, in the surface-treated member 1 according to this embodiment, cut in the thickness direction of the zinc-based plated steel material serving as the material of the surface-treated member 1.

As schematically illustrated in FIG. 3, the portion other than the base steel exposure portions 201 in the surface-treated member 1 according to this embodiment is made of the surface-treated steel material having a steel material 10 as a base metal and the zinc-based plating layers 20 located on the surfaces of the steel material 10 (that is, made of a zinc-based plated steel material).

The following will first describe the above-mentioned steel material 10 and zinc-based plating layer 20 in detail.

### <Regarding the steel material 10>

The steel material 10 used as the base metal of the surface-treated member 1 according to this embodiment is not particularly limited, and various types of steel materials are usable according to mechanical strength (for example, tensile strength) and so on required of the surface-treated member 1. Examples of such a steel material 10 include various types of Al killed steels, ultralow carbon steels containing Ti, Nb, or the like, high-strength steels containing ultralow carbon steel further containing a strengthening element such as P, Si, or Mn, and various types of steel materials containing various other components (Cr, N, Cu, B, Ni, Mg, Ca, V, Co, Zn, As, Y, Zr, Mo, Sn, Sb, Ta, W, Pb, Bi, REM, and so on).

Further, before later-described zinc-based plating is applied to the steel material 10, a pre-plating layer may be provided thereon. Metal usable for the pre-plating layer is Ni, Sn, an alloy composed of a combination of these elements, or the like. The use of a pre-plated steel material pre-plated with any of these in advance can eliminate unplating (a place where a plating metal is repelled by an oxide film or the like). This is inferred to be because, when the pre-plated steel material is immersed in a hot-dip plating bath, metal elements in the hot-dip plating bath and the pre-plating layer react to form Ni (Sn)-Al-Fe-Zn. A coating weight of the pre-plating layer per surface is preferably within a range of 0.2 to 2.0 g/m². With the pre-plating layer having a coating weight of 0.2g/m² or more, it is possible to surely exhibit the above-mentioned unplating inhibiting effect by the pre-plating. Further, with the pre-plating layer having a coating weight of 2.0 g/m² or less, the pre-plating layer inhibits the elution of Fe to prevent a difficulty in generating an Fe-Zn-based composite oxide, and at the same time, the above-mentioned unplating inhibiting effect is achieved.

Further, the thickness of the steel material 10 is not particularly limited and may be appropriately set according to the mechanical strength and so on required of the surface-treated member 1.

### <Regarding the zinc-based plating layer 20>

The zinc-based plating layer 20 is formed on each of the entire surfaces on both sides of the above-described steel material 10. Such a zinc-based plating layer 20 is not particularly limited as long as it contains at least zinc (Zn), and any of various types of known zinc-based plating can be employed.

Examples of such zinc-based plating include zinc plating represented by hot-dip galvanization, alloying hot-dip galvanization, and the like, zinc-nickel plating, zinc-iron plating, zinc-chromium plating, zinc-aluminum plating, zinc-titanium plating, zinc-magnesium plating, zinc-manganese plating, zinc-aluminum-magnesium plating, and zinc-aluminum-magnesium-silicon plating. Further, as the zinc-based plating, also usable is any of the above-mentioned various types of plating in which a small amount of a dissimilar metal element or cobalt, molybdenum, tungsten, nickel, titanium, chromium, aluminum, manganese, iron, magnesium, lead, bismuth, antimony, tin, copper, cadmium, arsenic, or the like as impurities is contained or in which an inorganic matter such as silica, alumina, or titania is dispersed. A plating method is not particularly limited, and any of various known plating methods such as an electroplating method, a hot-dip plating method, a vapor deposition plating method, a dispersion plating method, and a vacuum plating method may be used.

Among the various types of zinc-based plating described above, the zinc-based plating layer 20 according to this embodiment is more preferably a zinc-based plating layer having the chemical components to be detailed below, for instance. The use of the zinc-based plating layer 20 having the chemical components to be described below makes it possible to further improve various properties such as the corrosion resistance of the surface-treated member 1 according to this embodiment. The following will first describe the above-mentioned more preferable chemical composition of the zinc-based plating layer 20 in detail.

### <<Regarding the chemical composition of the zinc-based plating layer 20>>

As for the chemical composition of the zinc-based plating layer 20 according to this embodiment, in a mode, it has a chemical composition containing, in mass%, Al: 0.10% or more and less than 40.00% and Mg: 0.10% or more and less than 15.00%, with the balance consisting of Zn and impurities.

Further, in the chemical composition in the mode of the zinc-based plating layer 20 according to this embodiment, the zinc-based plating layer 20 is more preferably a plating layer containing, in mass%, Al: 0.10% or more and less than 40.00%, Mg: 0.10% or more and less than 15.00%, and Zn: 60.00% or more.

Further, as for the chemical composition of the zinc-based plating layer 20 according to this embodiment, in another mode, it has a chemical composition containing, in mass%, Al: 0.10% or more and less than 40.00% and Mg: 0.10% or more and less than 15.00% and further containing one or two or more selected from a group consisting of the following element group A, element group B, element group C, element group D, element group E, and element group F, with the balance consisting of Zn and impurities.

[element group A]: one or two selected from a group consisting of Si: 2.50% or less and Fe: 5.00% or less
[element group B]: one or two or more selected from a group consisting of Sb: less than 0.50%, Pb: less than 0.50%, and Sr: less than 0.50%
[element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
[element group D]: one or two or more selected from a group consisting of Sn: 20.00% or less, Bi: less than 5.00%, and In: less than 2.00%
[element group E]: one or two or more selected from a group consisting of Ca: 3.00% or less, La: less than 0.50%, Ce: less than 0.50%, and Y: 0.50% or less
[element group F]: B: less than 0.50%

### [Al: 0.10 mass% or more and less than 40.00 mass%]

In a preferred mode of the zinc-based plating layer 20 according to this embodiment, Al is an element necessary for forming the main metal structure (Zn-Al-Mg-based metal structure). Therefore, Al is preferably contained with a predetermined content or more so that the plated steel material surely has sufficient corrosion resistance. If the Al content in the zinc-based plating layer 20 is less than 0.10 mass%, it may not be possible to ensure the above-mentioned corrosion resistance. Therefore, in the zinc-based plating layer 20 according to this embodiment, the Al content is preferably 0.10 mass% or more. The Al content is preferably 3.00 mass% or more, more preferably 4.00 mass% or more, and still more preferably 6.00 mass% or more. With the Al content within the above-mentioned range, it is possible to ensure the corrosion resistance as the plated steel material.

On the other hand, if the Al content in the zinc-based plating layer 20 is 40.00 mass% or more, in a corrosive environment, an Al phase functioning as a cathode excessively increases to make the corrosion of the steel material 10 easily progress, and it may not be possible to ensure the corrosion resistance as the zinc-based plated steel material. Therefore, in the zinc-based plating layer 20 according to this embodiment, the Al content is preferably less than 40.00 mass%. The Al content is preferably 25.00 mass% or less, more preferably less than 25.00 mass%, and still more preferably 20.00 mass% or less.

### [Mg: 0.10 mass% or more and less than 15.00 mass%]

In the preferred mode of the zinc-based plating layer 20 according to this embodiment, Mg is an element necessary for forming the main metal structure (Zn-Al-Mg-based metal structure). Therefore, Mg is preferably contained with a predetermined content or more so that the plated steel material surely has the corrosion resistance. If the Mg content in the zinc-based plating layer 20 is less than 0.10 mass%, it may not be possible to ensure the above-mentioned corrosion resistance. Therefore, in the zinc-based plating layer 20 according to this embodiment, the Mg content is preferably 0.10 mass% or more. The Mg content is preferably 0.30 mass% or more, and more preferably 3.00 mass% or more. With the Mg content falling within the above-mentioned range, it is possible to ensure the corrosion resistance as the plated steel material.

On the other hand, if the Mg content in the zinc-based plating layer 20 is 15.00 mass% or more, in a corrosive environment, anode dissolution of the zinc-based plating layer tends to progress, and it may not be possible to ensure the corrosion resistance as the plated steel material. Therefore, in the zinc-based plating layer 20 according to this embodiment, the Mg content is preferably less than 15.00 mass%. The Mg content is preferably less than 12.50 mass%, and more preferably 12.00 mass% or less. With the Mg content falling within the above range, it is possible to ensure the corrosion resistance as the plated steel material.

In the zinc-based plating layer 20 according to this embodiment, the balance other than the above Al and Mg consists of Zn and impurities.

In the preferred mode of the zinc-based plating layer 20 according to this embodiment, Zn is an element necessary for forming the main metal structure (Zn-Al-Mg-based metal structure) and is an important element for improving the corrosion resistance as the plated steel material. Further, with the zinc-based plating layer 20 containing the above-mentioned Al and Mg within the above-mentioned ranges and further containing Zn, it is possible to ensure the corrosion resistance as the plated steel material.

Subsequently, the element group A to the element group F that the chemical composition of the zinc-based plating layer 20 can have in the preferred mode of the zinc-based plating layer 20 according to the other mode of this embodiment will be described in detail.

Note that, in the case where at least any one of the elements belonging to the following element group A to element group F is contained in the zinc-based plating layer 20 according to the other mode of this embodiment, it is preferable to contain at least one of the elements belonging to the following element group A to element group F within the following content range and with the total content of 60.00 mass% or less.

With the total content of the elements belonging to the element group A to the element group F being 60.00 mass% or less, it is possible to obtain effects, which will be described in detail below, exhibited by the added elements without impairing the effects by each other. The total content of the elements belonging to the element group A to the element group F is preferably 50.00 mass% or less, and more preferably 40.00 mass% or less.

### ◊ Element group A

The element group A that the zinc-based plating layer 20 can contain in the other mode of the zinc-based plating layer 20 according to this embodiment will be described. At least one of the following elements of the element group A is an element that can be contained in the zinc-based plating layer 20 in place of part of Zn in the balance.
[element group A]: one or two selected from Si: 2.50% or less and Fe: 5.00% or less

### [Si: 0 mass% or more and 2.50 mass% or less]

In the other mode of the zinc-based plating layer 20 according to this embodiment, since there may be a case where Si is not contained, the lower limit of its content is 0 mass%. On the other hand, Si is an element capable of inhibiting the excessive growth of the Fe-Al-based metal structure formed in the interface between the zinc-based plating layer 20 and the steel material 10 and further improving the adhesion between the zinc-based plating layer 20 and the steel material 10. In the case where Si is contained in the zinc-based plating layer 20, the content of Si is preferably 0.05 mass% or more, and more preferably 0.20 mass% or more to inhibit the excessive growth of the Fe-Al-based metal structure. On the other hand, if the content of Si exceeds 2.50 mass%, it may excessively form with Mg a high-melting-point intermetallic compound to hinder the formation of Al-Mg oxide having an effect of reducing Zn evaporation at the time of welding.

Further, if the Si content in a plating bath for manufacturing the zinc-based plating layer 20 is excessively high, the viscosity of the plating bath increases more than necessary, which may deteriorate operability during the manufacture of the plated steel material (hereinafter, referred to as "plating operability"). Therefore, the Si content in the plating bath is adjusted from the viewpoint of plating operability. The Si content in the zinc-based plating layer 20 is preferably 1.50 mass% or less, and more preferably 1.00 mass% or less.

### [Fe: 0 mass% or more and 5.00 mass% or less]

From the steel material 10 as the base metal, the elements forming the steel material sometimes enter the zinc-based plating layer 20. In particular, in the hot-dip plating method, the elements forming the steel material 10 tend to mix into the zinc-based plating layer 20 due to element interdiffusion caused by a solid-liquid reaction between the steel material 10 and the zinc-based plating layer 20. Such mixing of the elements often causes the zinc-based plating layer 20 to contain a certain amount of Fe, and its content often becomes 0.01 mass% or more. Promoting the above-mentioned interdiffusion improves the adhesion between the steel material 10 and the zinc-based plating layer 20. From the viewpoint of improving the adhesion between the steel material 10 and the zinc-based plating layer 20, the Fe content in the zinc-based plating layer 20 is preferably 0.20 mass% or more.

Further, Fe may be intentionally added into the plating bath used when the zinc-based plating layer 20 is formed, within a range not impairing the effects of the present invention. However, an increase in the Fe content in the plating bath leads to the formation of a high-melting-point intermetallic compound of Fe and Al in the plating bath. This is not preferable because such a high-melting-point intermetallic compound adheres as dross onto the zinc-based plating layer 20, which tends to greatly deteriorate the appearance grade. From this viewpoint, the Fe content in the plating bath is adjusted. The Fe content in the zinc-based plating layer 20 is preferably 5.00 mass% or less. The Fe content in the plating layer 20 is more preferably 3.00 mass% or less, and more preferably 2.00 mass% or less, 1.00 mass% or less, or 0.50 mass% or less.

### ◊ Element group B

The element group B that the zinc-based plating layer 20 can contain in the other mode of the zinc-based plating layer 20 according to this embodiment will be described. At least one of the following elements of the element group B is an element that can be contained in the zinc-based plating layer 20 in place of part of Zn in the balance.
[element group B]: one or two or more selected from a group consisting of Sb: less than 0.50%, Pb: less than 0.50%, and Sr: less than 0.50%
[Sb: 0 mass% or more and 0.50 mass% or less]
[Pb: 0 mass% or more and 0.50 mass% or less]
[Sr: 0 mass% or more and 0.50 mass% or less]

In the other mode of the zinc-based plating layer 20 according to this embodiment, since there may be a case where Sb, Pb, or Sr is not contained, the lower limits of the contents of these elements are 0 mass%. On the other hand, if at least one of Sb, Pb, and Sr is contained in the zinc-based plating layer 20, a spangle is formed on the surface of the zinc-based plating layer 20, enabling improved metallic luster. Therefore, from the viewpoint of further improving the design of the plated steel material, at least one of Sb, Pb, and Sr is preferably contained in the zinc-based plating layer 20. Such a design improving effect is exhibited when the content of at least one of Sb, Pb, and Sr is 0.05 mass% or more. Therefore, in the case where at least one of Sb, Pb, and Sr is contained in the zinc-based plating layer 20, it is preferable that the contents of these elements are each independently 0.05 mass% or more.

On the other hand, if the zinc-based plating layer 20 in which the content of any of Sb, Pb, and Sr exceeds 0.50 mass% is formed, a dross generation amount in the plating bath used for forming the zinc-based plating layer 20 becomes large, and it may not be possible to manufacture a plated steel material having a good plating quality. Therefore, it is preferable that the contents of Sb, Pb, and Sr in the zinc-based plating layer 20 are each independently 0.50 mass% or less. It is preferable that the contents of Sb, Pb, and Sr are each independently 0.20 mass% or less.

### ◊ Element group C

The element group C that the zinc-based plating layer 20 can contain in the other mode of the zinc-based plating layer 20 according to this embodiment will be described. At least one of the following elements of the element group C is an element that can be contained in the zinc-based plating layer 20 in place of part of Zn in the balance.
[element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
[Cu: 0 mass% or more and less than 0.25 mass%]
[Ti: 0 mass% or more and less than 0.25 mass%]
[Cr: 0 mass% or more and less than 0.25 mass%]
[Nb: 0 mass% or more and less than 0.25 mass%]
[Ni: 0 mass% or more and less than 0.25 mass%]
[Mn: 0 mass% or more and less than 0.25 mass%]
[Co: 0 mass% or more and less than 0.25 mass%]
[V: 0 mass% or more and less than 0.25 mass%]

In the other mode of the zinc-based plating layer 20 according to this embodiment, since there may be a case where Cu, Ti, Cr, Nb, Ni, Mn, Co, or V is not contained, the lower limits of the contents of these elements are 0 mass%. On the other hand, if at least one of Cu, Ti, Cr, Nb, Ni, Mn, Co, and V is contained in the zinc-based plating layer 20, at the time of the welding of such a plated steel material, these elements are taken into the Fe-Al-based metal structure generated by the welding, making it possible to further improve the corrosion resistance of a formed weld zone. Such an effect of improving the weld zone corrosion resistance is exhibited when the content of at least one of Cu, Ti, Cr, Nb, Ni, Mn, Co, and V in the zinc-based plating layer 20 is 0.05 mass% or more. Therefore, in the case where at least one of Cu, Ti, Cr, Nb, Ni, Mn, Co, and V is contained in the zinc-based plating layer 20, it is preferable that the contents of these elements are each independently 0.05 mass% or more.

On the other hand, if the zinc-based plating layer 20 in which the content of any of Cu, Ti, Cr, Nb, Ni, Mn, Co, and V is 0.25 mass% or more is formed, these elements form various intermetallic compounds in the plating bath for forming the zinc-based plating layer 20 to increase the viscosity of the plating bath, and it may not be possible to manufacture a plated steel material having a good plating quality. Therefore, it is preferable that the contents of Cu, Ti, Cr, Nb, Ni, Mn, Co, and V in the zinc-based plating layer 20 are each independently less than 0.25 mass%. It is preferable that the contents of Cu, Ti, Cr, Nb, Ni, Mn, Co, and V are each independently 0.20 mass% or less.

### ◊ Element group D

The element group D that the zinc-based plating layer 20 can contain in the other mode of the zinc-based plating layer 20 according to this embodiment will be described. At least one of the following elements of the element group D is an element that can be contained in the zinc-based plating layer 20 in place of part of Zn in the balance.
[element group D]: one or two or more selected from a group consisting of Sn: 20.00 %or less, Bi: less than 5.00%, and In: less than 2.00%
[Sn: 0 mass% or more and 20.00 mass% or less]
[Bi: 0 mass% or more and less than 5.00 mass%]
[In: 0 mass% or more and less than 2.00 mass%]

In the other mode of the zinc-based plating layer 20 according to this embodiment, since there may be a case where Sn, Bi, or In is not contained, the lower limits of their contents are 0 mass%. On the other hand, Sn, Bi, and In form intermetallic compounds with Mg in the zinc-based plating layer 20, enabling an improvement in the weldability of the zinc-based plating layer 20. Further, these intermetallic compounds all have high melting points, and therefore, when the plated steel material is welded, they remain as the intermetallic compounds without evaporating even after the welding. The presence of these elements makes it possible to improve the corrosion resistance and anti-corrosion properties and also improve the corrosion resistance of the weld zone during the welding. Such a corrosion resistance improving effect is exhibited when the content of at least one of Sn, Bi, and In in the zinc-based plating layer 20 is 0.05 mass% or more. Therefore, in the case where at least one of Sn, Bi, and In is contained in the zinc-based plating layer 20, it is preferable that the contents of these elements are each independently 0.05 mass% or more.

On the other hand, adding an excessively large amount of Sn increases the amount of the intermetallic compound to be formed, which may deteriorate the corrosion resistance of the zinc-based plating layer 20 after the welding. Further, adding excessively large amounts of Bi and In may make the zinc-based plating layer brittle and likely to peel off, and in addition, deteriorate the corrosion resistance of the zinc-based plating layer 20 after the welding. These phenomena are prominent when the content of Sn exceeds 20.00 mass%, when the content of Bi is 5.00 mass% or more, or when the content of In is 2.00 mass% or more. Therefore, the content of Sn is preferably 20.00 mass% or less, the content of Bi is preferably less than 5.00 mass%, and the content of In is preferably less than 2.00 mass%. The content of Sn is more preferably 10.00 mass% or less, the content of Bi is more preferably 3.00 mass% or less, and the content of In is more preferably 1.00 mass% or less.

### ◊ Element group E

The element group E that the zinc-based plating layer 20 can contain in the other mode of the zinc-based plating layer 20 according to this embodiment will be described. At least one of the following elements of the element group E is an element that can be contained in the zinc-based plating layer 20 in place of part of Zn in the balance.
[element group E]: one or two or more selected from a group consisting of Ca: 3.00% or less, La: less than 0.50%, Ce: less than 0.50%, and Y: 0.50% or less

### [Ca: 0 mass% or more and 3.00 mass% or less]

In the other mode of the zinc-based plating layer 20 according to this embodiment, since there may be a case where Ca is not contained, the lower limit of its content is 0 mass%. On the other hand, if Ca is contained in the plating bath for manufacturing the zinc-based plating layer 20, it is possible to reduce the dross generated as the Mg concentration increases during the plating operation, making it possible to improve plating operatiliby.

Further, Ca, when contained in the zinc-based plating layer 20, forms intermetallic compounds with Al and Zn. Further, in the case where Si is contained with Ca in the zinc-based plating layer 20, Ca forms an intermetallic compound with Si. These intermetallic compounds are high in melting point and have stable structures, making it possible to inhibit LME (Liquid Metal Embrittlement) when the plated steel material is welded. In the case where Ca is contained in the zinc-based plating layer 20, such a plating operability improving effect and an effect of inhibiting LME during welding are exhibited when the Ca content is 0.01 mass% or more. The Ca content in the zinc-based plating layer 20 is more preferably 0.05 mass% or more.

On the other hand, if the Ca content in the zinc-based plating layer 20 exceeds 3.00 mass%, the corrosion resistance as the plated steel material may deteriorate. From such a viewpoint, the Ca content in the zinc-based plating layer 20 is preferably 3.00 mass% or less. The Ca content in the zinc-based plating layer 20 is preferably 2.00 mass% or less, and more preferably 1.00 mass% or less.
[La: 0 mass% or more and less than 0.50 mass%]
[Ce: 0 mass% or more and less than 0.50 mass%]
[Y: 0 mass% or more and 0.50 mass% or less]

In the other mode of the zinc-based plating layer 20 according to this embodiment, since there may be a case where La, Ce, or Y is not contained, the lower limits of the contents of these elements are 0 mass%. On the other hand, La, Ce, and Y are elements exhibiting substantially the same effects as those of Ca. This is due to the fact that the atomic radii of these elements are close to the atomic radius of Ca, and when these elements are contained in the zinc-based plating layer 20, they substitute for Ca sites.

Such a plating operability improving effect and an effect of inhibiting LME during welding are exhibited when the contents of these elements are each independently 0.01 mass% or more. Therefore, in the case where at least one of La, Ce, and Y is contained, it is preferable that the contents of these elements are each independently 0.01 mass% or more. It is more preferable that the contents of La, Ce, and Y in the zinc-based plating layers 20 are each independently 0.05 mass% or more.

On the other hand, if the contents of La, Ce, and Y in the plating bath for manufacturing the zinc-based plating layer 20 are too high, the viscosity of the plating bath increases more than necessary, which may worsen plating operability. Therefore, from the viewpoint of plating operability, the contents of La, Ce, and Y in the plating bath are adjusted. It is preferable that the contents of La, Ce, and Y are independently less than 0.50 mass%, less than 0.50 mass%, and 0.50 mass% or less respectively. It is preferable that the contents of La, Ce, and Y are each independently 0.10 mass% or less.

### ◊ Element group F

The element group F that the zinc-based plating layer 20 can contain in the other mode of the zinc-based plating layer 20 according to this embodiment will be described. At least one of the following elements of the element group F is an element that can be contained in the zinc-based plating layer 20 in place of part of Zn in the balance.
[element group F]: B: less than 0.50%

### [B: 0 mass% or more and less than 0.50 mass%]

In the other mode of the zinc-based plating layer 20 according to this embodiment, since there may be a case where B is not contained, the lower limit of its content is 0 mass%. On the other hand, B has an effect of further inhibiting LME when contained in the zinc-based plating layer 20. This is inferred to be because, when B is contained in the zinc-based plating layer 20, it chemically bonds with at least one of Zn, Al, Mg, and Ca to form various intermetallic compounds. Further, it is considered that, when B is present in the zinc-based plating layer 20, B diffuses from the zinc-based plating layer 20 to the steel material 10 to have an effect of further inhibiting LME of the steel material 10 by boundary strengthening. Further, various intermetallic compounds formed with respect to B are very high in melting point, and it is considered that this also contributes to the inhibition of Zn evaporation during welding. These improving effects are exhibited when the content of B is 0.05 mass% or more. Therefore, in the case where B is contained, the content of B is preferably 0.05 mass% or more.

On the other hand, if B is excessively contained in the plating bath so that the zinc-based plating layer 20 can contain B, the plating melting point sharply increases to deteriorate plating operability, and it may not be possible to manufacture a plated steel material having an excellent plating quality. Such deterioration in the plating operability is prominent when the content of B is 0.50 mass% or more, and therefore, the content of B is preferably less than 0.50 mass%. The content of B is more preferably 0.10 mass% or less.

### [A method of measuring the chemical components]

It is possible to measure the above-described chemical components of the zinc-based plating layer 20 by using ICP-AES (Inductively Coupled Plasma Atomic Emission Spectrometry) or ICP-MS (Inductively Coupled Plasma Mass Spectrometry). Note that ICP-AES is used for analyzing chemical components with up to 0. 1 mass%, and ICP-MS is used for analyzing trace chemical components with less than 0.1 mass%. The plated steel material is immersed in a 10% HCl aqueous solution containing an inhibitor for about one minute so that a zinc-based plating layer portion is peeled off, whereby a solution in which this zinc-based plating layer is dissolved is prepared. By analyzing the obtained solution by ICP-AES or ICP-MS, it is possible to obtain the overall average chemical components of the zinc-based plating layer.

### <<Regarding the coating weight of the zinc-based plating layer 20>>

The coating weight of the above-described zinc-based plating layer 20 per surface of the steel material is preferably, for example, 10.0 g/m² or more, and more preferably 50.0 g/m² or more. Further, the coating weight of the zinc-based plating layer 20 per surface of the steel material is preferably, for example, about 200.0 g/m², and more preferably 150.0 g/m² or less. The zinc-based plating layer 20 whose coating weight is within the above-mentioned range enables the surface-treated member 1 according to this embodiment to exhibit sufficient corrosion resistance.

Note that, to measure such a coating weight of the zinc-based plating layer 20, a sample with a dimension of 30 mm × 30 mm is cut out from the surface-treated member 1 and its mass is measured in advance. A tape seal is pasted on one surface of this sample to prevent the zinc-based plating layer on this surface side from dissolving in the next process. Then, this sample is immersed in the 10% HCl aqueous solution containing the inhibitor, whereby the zinc-based plating layer is peeled off by pickling, and the mass of the pickled sample is measured. From a mass change of the sample before and after the pickling, it is possible to determine the coating weight of the zinc-based plating layer 20 per surface.

### <<Regarding the base steel exposure portions 201 and the exposure region 203 in the zinc-based plating layer 20>>

Subsequently, the base steel exposure portions 201, which are present in at least part of the zinc-based plating layer 20 according to this embodiment, and the exposure region 203 having these base steel exposure portions 201 will be described in detail.

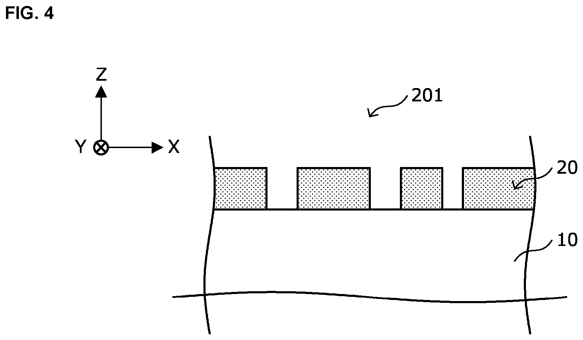

FIG. 4 schematically illustrates a cross section of the surface-treated member 1 illustrated in FIG. 2 cut in the Z-axis direction along the B-B cutting line. The sectional view illustrated in FIG. 4 corresponds to the portion of the exposure region 203 where the base steel exposure portions 201 are present, in the surface-treated member 1 according to this embodiment, cut in the thickness direction of the zinc-based plated steel material as the material of the surface-treated member 1.

As schematically illustrated in FIG. 4, in the surface-treated member 1 according to this embodiment, the portion where the base steel exposure portions 201 are present is made of the surface-treated steel material having the steel material 10 as the base metal and the zinc-based plating layer 20 located on the surface of the steel material 10 (that is, made of the zinc-based plated steel material). Further, in at least part of the zinc-based plating layer 20, there are portions where the surface of the steel material 10 (that is, the base steel) is exposed.

As is briefly mentioned previously, in the surface-treated member 1 according to this embodiment, the intentionally provided base steel exposure portions 201 are present at a specific proportion in part of the zinc-based plating layer 20. This makes it possible to produce the previously described dense composite layer on the surfaces of the zinc-based plating layer 20 and the steel material 10 when the portions where the base steel exposure portions 201 are provided in the surface-treated member 1 according to this embodiment are embedded in concrete. Consequently, the surface-treated member 1 according to this embodiment is capable of exhibiting excellent corrosion resistance even in concrete. From the above, it follows that the surface-treated member 1 according to this embodiment is preferably used while at least part of the exposure region 203 having the base steel exposure portions 201 is embedded in concrete. Further, the exposure region 203 having the base steel exposure portions 201 is preferably provided in a portion, in the surface-treated member 1 according to this embodiment, that is planned to be embedded in concrete.

### ◊ Regarding a method of specifying the positions where the base steel exposure portions 201 are present

The following will first describe a method of specifying the positions where the base steel exposure portions 201 are present in the zinc-based plating layer 20.

The base steel exposure portions 201 present in the zinc-based plating layer 20 according to this embodiment are portions where the zinc-based plating layer 20 is not provided and the base steel is exposed. Therefore, by executing any of various color reaction tests causing a color reaction at the portions where the base steel is exposed, across the whole surface of the zinc-based plating layer 20, it is possible to specify their positions.

Such a color reaction test is not particularly limited and any of various color reaction tests is employable, but it is preferable to use, for example, the ferroxyl test stipulated in JIS H8626 (1995) or the pinhole test disclosed in Non-patent Document (Shozo Matsuda, Tadashi Tanaka, Keiichi Tanigawa, "New Pinhole Test Method of Galvanized Sheet Steel", Journal of the Metal Finishing Society of Japan, Vol. 23 (1972), p.142-146). In the above-mentioned two kinds of color reaction tests, after a reagent for the color reaction is applied on the surface of a specimen to cause the color reaction, the surface of the specimen is covered with a test paper, and portions where the color reaction occurs are transferred to the test paper. Therefore, the use of these color reaction tests makes it possible to specify portions where the base steel exposure portions 201 are present, regardless of the shape of the surface-treated member 1.

Here, various reagents, test papers used for the transfer of the color reaction portions, and so on, which are used in the color reaction test, the procedure of the color reaction test, and so on may be any as long as they conform to those stipulated in the documents disclosing the test methods.

### ◊ Regarding the presence state of the base steel exposure portions 201

Subsequently, the presence state of the base steel exposure portions 201 in the zinc-based plating layer 20 according to this embodiment will be described.

In the surface-treated member 1 according to this embodiment, the presence state of the base steel exposure portions 201 in the zinc-based plating layer 20 is determined through the observation of a cross section of the zinc-based plating layer 20. In more detail, it is determined by observing, with a microscope, each cross section obtained by cutting the base steel exposure portions 201 in the thickness direction of the steel material 10 according to the shape of the base steel exposure portions 201 in a plan view from above the zinc-based plating layer 20 (for example, from the Z-axis direction in FIG. 2). The microscope used at this time is not particularly limited as long as it has a magnifying power high enough to observe the cross section. The microscope used for the observation may be an optical microscope or an electron microscope such as SEM.

In this embodiment, the presence state of the base steel exposure portions 201 is evaluated through the microscope observation of each cross section obtained in the above-described manner and the confirmation of the presence state of a cross section giving regions such as "region A" and "region B", which will be detailed below.

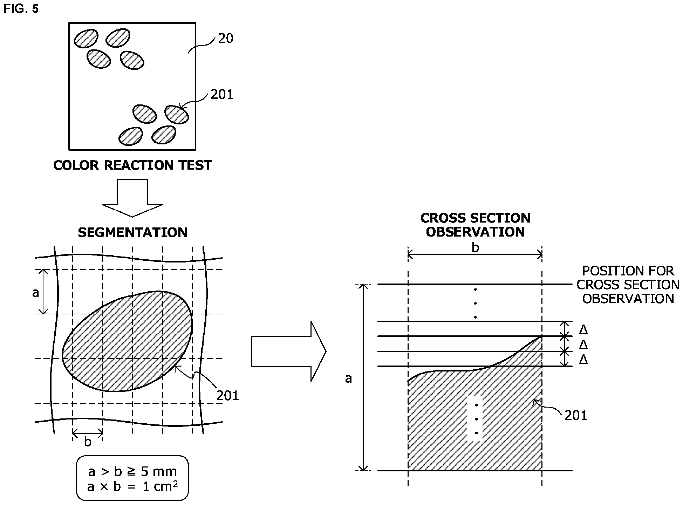

The following will describe a more specific procedure with reference to FIG. 5 to FIG. 8. FIG. 5 to FIG. 8 are explanatory views for explaining the base steel exposure portions 201 in the surface-treated member according to this embodiment.

When the presence state of the base steel exposure portions 201 is confirmed, as illustrated on the upper left in FIG. 5, the above-described color reaction test is first executed on the whole surface of the zinc-based plating layer 20 to specify places where the base steel exposure portions 201 are present. Thereafter, as illustrated on the lower left in FIG. 5, the specified base steel exposure portions 201 are each seen in a plan view from above the zinc-based plating layer 20 (the Z-axis direction in FIG. 2), and the base steel exposure portions 202 are each virtually segmented. At the time of such segmentation, the base steel exposure portions are each segmented into unit rectangular regions each having short sides b of 5 mm and an area (area equal to the long side a × the shorter side b) of 1 cm².

Subsequently, in each of the virtual regions resulting from the segmentation (rectangular regions), an area ratio of the base steel exposure portion 201 occupying the region is calculated. Regarding all the regions, it is determined whether or not the area ratio of the base steel exposure portion 201 occupying the region (1 cm² area) is 3% or more.

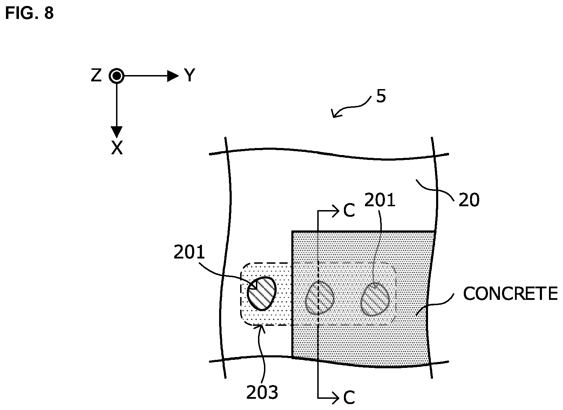

Subsequently, regions (rectangular regions) where the area ratio of the base steel exposure portion 201 is 3% or more are all set as target regions of the cross section observation as illustrated on the lower right in FIG. 5. As schematically illustrated on the lower right in FIG. 5, the surface-treated member 1 corresponding to the region of interest is cut at intervals of Δ = 50 µm. The microscope observation is conducted on all the obtained cross sections to confirm the presence state of the base steel exposure portions 201. Note that the cutting direction for obtaining the cross section illustrated on the lower right in FIG. 5 will be described later with reference to FIG. 8.

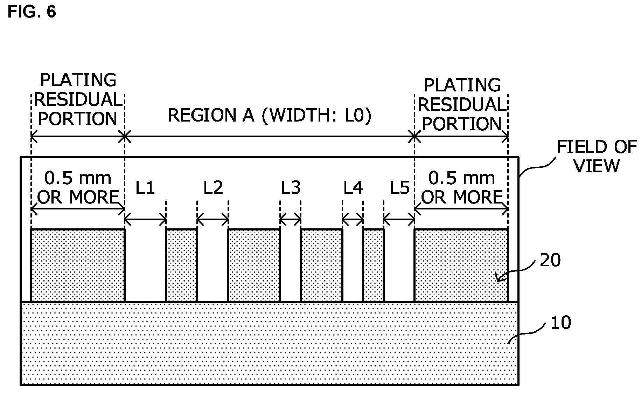

Through the above-described microscope observation, a field of view schematically illustrated in FIG. 6, for example, can be obtained for each cross section. Here, in the above-described microscope observation, an optical microscope (for example, ECLIPSE LV150 manufactured by Nikon Corporation, or the like) may be used, with an about 100x magnification being selected. Further, the size of the field of view is set to 1.5 mm × 2.0 mm.

Here, when an arbitrary portion with a dimension of 1.5 mm × 2.0 mm is observed with the microscope in the cross section obtained in the above-described manner, a portion, in the field of view, where the surface of the zinc-based plating layer 20 is present with a 0.5 mm length or more along a width direction, which is a direction orthogonal to the thickness direction of the steel material 10, will be referred to as a "plating residual portion". Then, a region including the base steel exposure portions 201, located between the two adjacent plating residual portions will be defined as a "region A".

In the case of the example illustrated in FIG. 6, suppose that the width-direction length of the mass of the zinc-based plating layer 20 located on the left end in the drawing and the width-direction length of the mass of the zinc-based plating layer 20 located on the right end are each 0.5 mm or more. At this time, the portion located between the masses of the zinc-based plating layer 20 located on the left end and the right end in the drawing is a portion corresponding to the "region A" in the field of view exemplified in FIG. 6.

In the zinc-based plating layer 20 according to this embodiment, the width-direction lengths of the base steel exposure portions 201 present in the region A defined as above are each within 1.0 to 100.0 µm. In the example illustrated in FIG. 6, the five base steel exposure portions 201 are present in the region A, and the width-direction lengths L1, L2, L3, L4, and L5 of the respective base steel exposure portions 201 are each within the range of 1.0 to 100.0 µm.

If the width-direction length of each of the base steel exposure portions 201 in the region A is less than 1.0 µm, the exposure degree of the surface of the steel material 10 is too low, and as a result, when such an exposure region 203 of the surface-treated member 1 is placed in concrete, the previously described dense composite layer is not formed, and the desired corrosion resistance is not achieved. In the region A, with the base steel exposure portions 201 each having a width-direction length of 1.0 µm or more, it is possible to achieve the corrosion resistance in concrete. The width-direction length of each of the base steel exposure portions 201 in the region A is preferably 3.0 µm or more, and more preferably 5.0 µm or more.

On the other hand, if the width-direction length of each of the base steel exposure portions 201 in the region A is more than 100.0 µm, the exposure degree of the surface of the steel material 10 is too high, and as a result, when such an exposure region 203 of the surface-treated member 1 is placed in concrete, it is not possible to achieve the desired corrosion resistance even if the previously described dense composite layer is formed in part. With the base steel exposure portions 201 each having a width-direction length of 100.0 µm or less in the region A, it is possible to achieve corrosion resistance in concrete. The width-direction length of each of the base steel exposure portions 201 in the region A is preferably 90.0 µm or less, and more preferably 70.0 µm or less.

Further, in the zinc-based plating layer 20 according to this embodiment, the total width-direction length of the base steel exposure portions 201 per unit width-direction length in the region A defined as above is 600.0 µm/mm or less. If the total width-direction length of the base steel exposure portions 201 per unit width-direction length is over 600.0 µm, the exposure degree of the surface of the steel material 10 is too high, and as a result, when such an exposure region 203 of the surface-treated member 1 is placed in concrete, it is not possible to achieve the desired corrosion resistance even if the previously described dense composite layer is formed in part. With the base steel exposure portions 201 having the total width-direction length of 600.0 µm/mm or less per unit length, Fe originating from the base steel exposure portions 201 and Zn originating from the zinc-based plating layer 20 are supplied at an appropriate supply speed, so that the previously described dense composite layer is appropriately formed, making it possible to achieve the desired corrosion resistance.

In the example illustrated in FIG. 6, the five base steel exposure portions 201 are present in the region A, the width-direction lengths of the respective base steel exposure portions 201 are L1, L2, L3, L4, and L5, and the width-direction length of the region A is L0 [mm]. In this case, the total width-direction length of the base steel exposure portions 201 per unit length is given by {(L1 + L2 + L3 + L4 + L5)/L0}.

The total width-direction length of the base steel exposure portions 201 per unit length is preferably 550.0 µm/mm or less, and more preferably 500.0 µm/mm or less.

On the other hand, the lower limit value of the total width-direction length of the base steel exposure portions 201 per unit length is not particularly stipulated. However, if the total width-direction length of the base steel exposure portions 201 per unit length is less than 100.0 µm/mm, the exposure degree of the surface of the steel material 10 is too low, and as a result, when such an exposure region 203 of the surface-treated member 1 is placed in concrete, the previously described dense composite layer is not formed, and it may not be possible to achieve the desired corrosion resistance. Therefore, the total width-direction length of the base steel exposure portions 201 per unit length is preferably 100.0 µm/mm or more, more preferably 150.0 µm/mm or more, and still more preferably 200.0 µm/mm or more.

Further, in the zinc-based plating layer 20 according to this embodiment, the number of the base steel exposure portions 210 present per unit width-direction length in the region A defined as above is within a range of 3.0 to 20.0/mm. If the number of the base steel exposure portions 201 present per unit length is less than 3.0/mm, the exposure degree of the surface of the steel material 10 is too low, and as a result, when such an exposure region 203 of the surface-treated member 1 is placed in concrete, the previously described dense composite layer is not formed, and it is not possible to achieve the desired corrosion resistance. With the number of the base steel exposure portions 201 present per unit width-direction length being 3.0/mm or more, Fe originating from the base steel exposure portions 201 and Zn originating from the zinc-based plating layer 201 are appropriately supplied, so that the previously-described dense composite layer is appropriately formed, making it possible to achieve the desired corrosion resistance. The number of the base steel exposure portions 201 present per unit width-direction length is preferably 5.0/mm or more, and more preferably 10.0/mm or more.

On the other hand, if the number of the base steel exposure portions 201 present per unit width-direction length is over 20.0/mm, the exposure degree of the surface of the steel material 10 is too high, and as a result, when such an exposure region 203 of the surface-treated member 1 is placed in concrete, the desired corrosion resistance is not achieved even if the previously described dense composite layer is formed in part. With the number of the base steel exposure portions 201 present per unit width-direction length being 20.0/mm or less, it is possible to achieve the desired corrosion resistance. The number of the base steel exposure portions 201 present per unit width-direction length is preferably 18.0/mm or less, and more preferably 15.0/mm or more.

In the example illustrated in FIG. 6, the five base steel exposure portions 201 are present in the region A, and the width-direction length of the region A is L0 [mm]. In this case, the number of the base steel exposure portions 201 present per unit length is given by (5/L0).

Note that, in the region A satisfying the above conditions, the average length of the base steel exposure portions 201 is preferably within a range of 30.0 to 80.0 µm. With the base steel exposure portions 201 having an average length within the range of 30.0 to 80.0 µm, the surface-treated member according to this embodiment can have still higher corrosion resistance in concrete. The average length of the base steel exposure portions 201 in the region A is more preferably within a range of 50.0 to 70.0 µm.

Further, in the above-described region A sandwiched between the two plating residual portions, a portion where the plating is left in an island shape, in the base steel exposure portion 201 will be referred to as an "island-shaped plating portion". At this time, the average length of the island-shaped plating portions in the region A is preferably within a range of not less than 10.0 µm nor more than 300.0 µm. With the island-shaped plating portions having an average length of 10.0 µm or more, it is possible to make the supply amount of Zn more appropriate, making it possible to form a denser composite layer. The average length of the island-shaped plating portions in the region A is more preferably 50.0 µm or more.

Further, with the island-shaped plating portions in the region A having an average length of 300.0 µm or less, it is possible to make the supply amount of Zn more appropriate while keeping the supply amount of Fe from the steel material appropriate, making it possible to form a denser composite layer. The average length of the island-shaped plating portions in the region A is more preferably 200.0 µm or less.

For example, in the example illustrated in FIG. 6, the four island-shaped plating portions are present in the region A, and the total length of the island-shaped plating portions is given by {L0 - (L1 + L2 + L3 + L4 + L5)}. Therefore, the average length of the island-shaped plating portions in the region A in the example illustrated in FIG. 6 is given by {L0 - (L1 + L2 + L3 + L4 + L5)}/4.

Note that the above-mentioned various lengths in the field of view can be measured using a length measurement function or the like integrated into the used microscope.

Further, in the exposure region 203 of the zinc-based plating layer 20 according to this embodiment, a region giving a cross section where the total width-direction length of the base steel exposure portions 201 per unit width-direction length is 600.0 µm/mm or less when the above-described cross section is observed with the microscope will be defined as a "region B". That is, such a region B means a region where the total width-direction length of the base steel exposure portions 201 per unit length is 600.0 µm/mm or less, in the region A defined as exemplified in FIG. 6.

In the zinc-based plating layer 20 according to this embodiment, the total area of the regions B defined as above in a plan view from above is 0.7% or more of the surface area of the steel material 10 in a plan view. If the total area of the regions B in the plan view from above is less than 0.7%, the exposure degree of the surface of the steel material 10 is too low, and as a result, when such an exposure region 203 of the surface-treated member 1 is placed in concrete, the previously described composite layer is not formed, and it is not possible to achieve the desired corrosion resistance. With the regions B in the plan view from above having a total area of 0.7% or more, the desired corrosion resistance is achieved in concrete. The total area of the regions B in the plan view from above is preferably 3.0% or more, and more preferably 5.0 % or more.

On the other hand, the upper limit value of the total area of the regions B in the plan view from above may be 100.0%, but is preferably 40.0% or less in practice. With the regions B in the plan view from above having a total area of 40.0% or less, it is possible to further improve the corrosion resistance in concrete. The total area of the regions B in the plan view from above is more preferably 30.0% or less, still more preferably 20.0% or less, and yet more preferably 15.0% or less.

Here, the above-mentioned total area of the regions B in the plan view from above can be determined as follows. Specifically, by observing the cross sections exemplified in FIG. 6, it is possible to not only identify a cross section giving the region B but also determine the total width-direction length of the base steel exposure portions 201 per unit length in such a region B. Further, as described with reference to FIG. 5, the cross sections to undergo the cross-section observation are obtained by cutting the surface-treated member 1 of interest at intervals of Δ = 50 µm. Therefore, a value equal to the total width-direction length of the base steel exposure portions 201 per unit length in the region B, which is obtained in the cross-section observation, multiplied by the cross-section observation interval Δ = 50 µm can be considered as the area of the region B in the plan view from above, corresponding to the cross section of interest. By executing such processing, it is possible to find the total area of the regions B in the plan view from above.

### ◊ Regarding the direction of the cutting line at the time of the cross-section observation

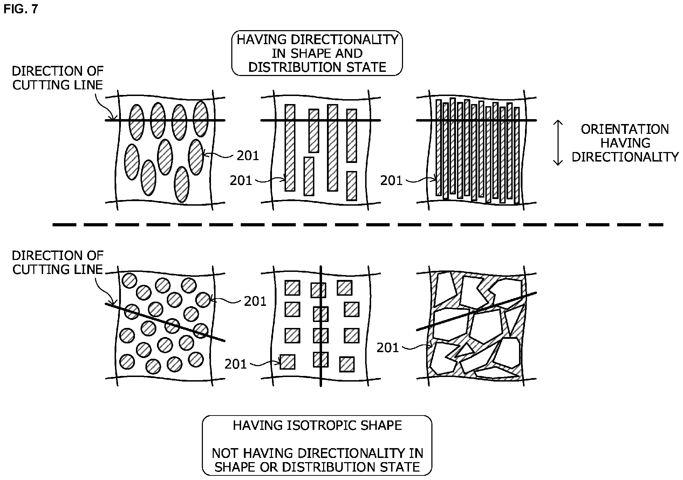

Here, the direction of the cutting line at the time of the above-described cross-section observation will be described with reference to FIG. 7. In the surface-treated member 1 according to this embodiment, to obtain the above-described cross section at the time of identifying the base steel exposure portions 201, the surface-treated member 1 is cut in the thickness direction of the steel material 10. At this time, the direction of the cutting line is decided according to the shape or distribution state of the base steel exposure portions 201 in the plan view from above the zinc-based plating layer 20.

FIG. 7 illustrates the classification of examples of the shape and distribution state of the base steel exposure portions 201 in a macroscopic plan view from above the zinc-based plating layer 20 (Z-axis direction). In the surface-treated member 1 according to this embodiment, the shapes and distribution states of the base steel exposure portions 201 are roughly classified into those having directionality as illustrated in the group on the upper side in FIG. 7 and those having an isotropic shape or not having directionality in the shape and distribution state as illustrated in the group on the lower side in FIG. 7.

In the group illustrated on the upper side in FIG. 7, the orientations have directionality (the up-down direction of the paper in the case of the upper side in FIG. 7) as in one in which the base steel exposure portions 201 have a substantially elliptical shape and are distributed with the major axis directions of the ellipses being substantially parallel to one another (the left end drawing on the upper side in FIG. 7) and those in which the the base steel exposure portions 201 have a substantially rectangular shape and are distributed with their long-side directions being substantially parallel to one another (the middle and right end drawings on the upper side in FIG. 7). In such a case, a direction orthogonal to the orientation having directionality is defined as the direction of the cutting line in this embodiment.

Further, in the group illustrated on the lower side in FIG. 7, the base steel exposure portions 201 have isotropic shapes or have no directionality in shape or distribution state, as in one in which the circular base steel exposure portions 201 are distributed (the left end drawing on the lower side in FIG. 7), one in which the square base steel exposure portions 201 are randomly distributed (the middle drawing on the lower side in FIG. 7), and one in which the zinc-based plating layer 20 is distributed in an island shape (the right end drawing on the lower side in FIG. 7). In such a case, the direction of the cutting line is not particularly stipulated, and any direction may be the direction of the cutting line in this embodiment.

Hitherto, the surface-treated member 1 according to this embodiment has been described in detail with reference to FIG. 2 to FIG. 7.

It should be noted that, though the case where the surface-treated member 1 according to this embodiment is provided in concrete has been described above, the surface-treated member 1 according to this embodiment is also applicable in an alkaline environment in which Ca is present, other than concrete.

### (Regarding Composite Structure)

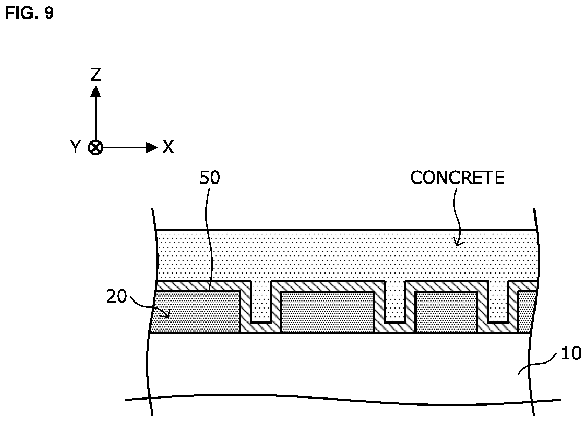

Subsequently, a composite structure of the surface-treated member according to this embodiment described hitherto and concrete will be described with reference to FIG. 8 and FIG. 9. FIG. 8 and FIG. 9 are explanatory views for explaining the composite structure according to this embodiment.

As exemplified in FIG. 8, the composite structure 5 according to this embodiment is a structure in which the surface-treated member 1 according to this embodiment described above and concrete are combined. As previously described, in at least part of the surface of the zinc-based plating layer 20 that the surface-treated member 1 has, the exposure region 203 having the base steel exposure portions 201 is present. In the composite structure 5 according to this embodiment, at least part of such an exposure region 203 is in contact with the concrete, and the surface-treated member 1 and the concrete are in a composite state.

Here, the concrete of interest in the composite structure 5 according to this embodiment includes not only various kinds of concrete such as "ready-mixed concrete" stipulated in JIS A5308 (2019) but also alkaline concrete-like materials containing much Ca, such as hydrated solidified steel slag.

FIG. 9 schematically illustrates a cross section of the composite structure 5 illustrated in FIG. 8 when it is cut in the Z-axis direction along the C-C cutting line. The cross section illustrated in FIG. 9 corresponds to a cross section that is obtained when a portion, of the exposure region 203, in contact with the concrete, in the composite structure 5 according to this embodiment is cut in the thickness direction of the zinc-based plated steel material serving as the material of the surface-treated member 1.

As schematically illustrated in FIG. 9, in the composite structure 5 according to this embodiment, the portion where the exposure region 203 and the concrete are in contact is composed of the surface-treated steel material, which has the steel material 10, the zinc-based plating layer 20 located on the surface of the steel material 10, and the base steel exposure portions 201 present in part of the zinc-based plating layer 20, and the concrete.

Further, in the exposure region 203 in contact with the concrete, an Fe-Zn-Ca-based composite layer 50 containing Fe, Zn, and Ca is preferably present in at least part of an interface between the zinc-based plating layer 20 and the concrete or an interface between the steel material 10 and the concrete. Further, such an Fe-Zn-Ca-based composite layer 50 is preferably formed in both the interface between the zinc-based plating layer 20 and the concrete and the interface between the steel material 10 and the concrete as exemplified in FIG. 9.

Here, since the steel material 10 in the composite structure 5 according to this embodiment has the same configuration and exhibits the same effect as the above-described configuration and effect of the steel material 10 in the surface-treated member 1, a description thereof will be omitted below.

Further, since the zinc-based plating layer 20 in the composite structure 5 according to this embodiment and the base steel exposure portions 201 present in such a zinc-based plating layer 20 have the same configurations as the previously described configurations of the zinc-based plating layer 20 and the base steel exposure portions 201 in the surface-treated member 1, descriptions thereof will be omitted below.

Note that, in the composite structure 5, component interdiffusion can occur between the interface portion of the zinc-based plating layer 20 in contact with the concrete and the concrete, and thus it can be considered that the chemical composition of the interface portion is changed from the chemical composition of the zinc-based plating layer 20 in a portion not in contact with the concrete. However, the average composition of the whole zinc-based plating layer 20 is the same as the previously described chemical composition of the zinc-based plating layer 20 in the surface-treated member 1.

The Fe-Zn-Ca-based composite layer 50 is a layer made of a reaction product produced through the mutual reaction of Fe originating from the steel material 10, Zn originating from the zinc-based plating layer 20, and Ca originating from the concrete. Further, the Fe-Zn-Ca-based composite compound produced by such a reaction has a dense structure unlike a Ca-Zn-based composite compound. Therefore, owing to the presence of such an Fe-Zn-Ca-based composite layer 50 in at least part of the interface between the zinc-based plating layer 20 and the concrete or the interface between the steel material 10 and the concrete, the composite structure 5 according to this embodiment exhibits excellent corrosion resistance in the concrete.

Such an Fe-Zn-Ca-based composite layer 50 is preferably a layer having a chemical composition containing, in mass%, Fe: not less than 1.0% nor more than 20.0%, Zn: not less than 10.0% nor more than 40.0%, and Ca: not less than 5.0% nor more than 15.0%, with the balance consisting of H, C, O, and impurities. By being made of the Fe-Zn-Ca-based composite compound having the above-mentioned chemical composition, the Fe-Zn-Ca-based composite layer 50 allows the composite structure 5 according to this embodiment to exhibit excellent corrosion resistance in the concrete.

Further, in the case where the zinc-based plating layer 20 further contains Al and Mg as the chemical composition, the chemical composition of the above-described Fe-Zn-Ca-based composite layer 50 preferably further contains at least one of Al: not less than 0% nor more than 10.0% and Mg: not less than 0% nor more than 10.0% in place of part of H, C, and O in the aforesaid balance. By being made of the Fe-Zn-Ca-based composite compound having the above-described chemical composition, the Fe-Zn-Ca-based composite layer 50 allows the composite structure 5 according to this embodiment to exhibit more excellent corrosion resistance in concrete.

Hitherto, the composite structure 5 according to this embodiment has been described with reference to FIG. 8 and FIG. 9.

### (Regarding Method of Manufacturing Surface-treated Member)

Hereinafter, an example of a method of manufacturing the surface-treated member 1 according to this embodiment will be described.

### <A method of manufacturing the surface-treated steel material as the material>

The surface-treated steel material as the material of the surface-treated member 1 according to this embodiment is manufactured by using the above-described steel material 10 as the base metal and forming the zinc-based plating layers on the surfaces of such a steel material 10.

Here, for the formation of the zinc-based plating layers, not only a hot-dip plating method but also a thermal spraying method, a cold spraying method, a sputtering method, a vapor deposition method, an electroplating method, and the like can be employed. However, the hot-dip plating method is the most preferable in terms of cost.

Thereafter, the specific processing process to be described below is applied to desired positions (in more detail, portions where the base steel exposure portions are to be formed) of the obtained plated steel material (the steel material 10 having the zinc-based plating layers) to form the base steel exposure portions in the zinc-based plating layers. Consequently, it is possible to manufacture the surface-treated steel material serving as the material of the surface-treated member 1 according to this embodiment.

The following will describe in detail an example of the manufacturing method for obtaining the surface-treated steel material according to this embodiment using the hot-dip plating method.

In the manufacturing process of such a surface-treated steel material, after a steel sheet, which is an example of the steel material 10 used as the base metal, is first rolled into a desired sheet thickness by a Sendzimir method, it is coiled and installed on a hot-dip plating line.

On the hot-dip plating line, the steel sheet is continuously passed while being let out from the coil. At this time, by an annealing facility provided on the line, the steel sheet is subjected to an 800°C thermal reduction process in an N₂-5% H₂ gas atmosphere under an environment with an oxygen concentration of, for example, 20 ppm or less not easily causing oxidation, thereafter air-cooled with an N₂ gas to around the bath temperature of a plating bath on a subsequent stage + around 20°C, and immersed in the plating bath.

Here, in the plating bath, the dissolved plating alloy having the above-described chemical components has been prepared. The bath temperature of the plating bath is set to the melting point of the plating alloy or higher (for example, about 460 to 660°C).

When the materials of the plating alloy are made, it is preferable to use pure metal (99% purity or more) as an alloy material to prepare the plating alloy. First, predetermined amounts of alloy metals are mixed such that the plating layer has the above-mentioned composition, and completely melted to be an alloy using a high-frequency induction furnace, an arc furnace, or the like in a vacuum or inert gas replacement condition. Further, this alloy in which the predetermined components (the aforesaid composition of the plating layers) are mixed is melted in the atmosphere, and the obtained melt is used as the plating bath.

Note that the use of the pure metal for preparing the above-described plating alloy is not restrictive, and a melt of an existing Zn alloy, Mg alloy, and Al alloy may be used. At this time, there is no problem as long as an alloy with the predetermined composition containing only a small amount of impurities is used.

After immersed in the above-mentioned plating bath, the steel sheet is pulled up at a predetermined speed. At this time, the plating thickness is controlled using, for example, an N₂ wiping gas so that the zinc-based plating layers to be formed have a desired thickness. Here, as conditions other than the bath temperature, typical plating operation conditions may be employed, and no special facilities or conditions are required.

Further, various kinds of heat treatments may be applied to the dissolved plating alloy located on the steel sheet as required.

Thereafter, a processing process such as a flaw introduction process or a bending process is applied to the zinc-based plating layers at desired positions of the manufactured surface-treated steel material. Consequently, the base steel exposure portions 201 are formed at the processed portions.

For example, in the case where the base steel exposure portions 201 are formed by the flaw introduction process, a blade in which a tip portion with a 30 µm width or less has a 50 µm length or more and that is sufficiently harder as compared with the plating structure is used, and such a blade is pushed against the steel sheet perpendicularly. Thereafter, a certain pressure is given along the direction in which the blade penetrates into the steel sheet. In this state, the blade is linearly moved to form flaws in the surface of the zinc-based plating layer. It is possible to change the base steel exposure ratio by changing the number of the flaws formed per unit area. Further, even in the case where the other manufacturing conditions are not changed, by forming the flaws using the above-mentioned blade having the wide tip, it is possible to control the shortest distance from given points of the base steel exposure portions up to the zinc-based plating layer to a desired state, using the flexure of the the blade caused by the pressurization, the vibration of the blade generated by the movement of the blade, or the like.

Here, a possible method for pressing the blade is to, for example, put a 3 kg or 5 kg weight on the blade. This pressure is a pressure large enough to form the flaws in the zinc-based plating layer but is a pressure that can scarcely form flaws in the steel material. Further, the movement speed of the blade is not particularly limited. Note that, if the blade and the steel material slide on each other, a usable method is to set the movement speed of the blade to 50 cm/second or less from the viewpoint of preventing the inability to form the flaws.

Further, in the case where, for example, the base steel exposure portions 201 are formed by the bending process, the wrapping method using a mandrel or a die, stipulated in JIS Z2248 (2022), may be used. Here, the mandrel has a circular cylindrical shape with the radius R, and the die has at least one tip portion not acute but rounded with the radius R (unit: mm).

The above-described mandrel or die is placed near the center of the desired plated steel material, one side of the plated steel material is fixed, its other side is wrapped around the mandrel or the die, and the zinc-based plating layers are processed. At this time, by controlling the sheet thickness t (unit: mm) of the plated steel material, the radius R (unit: mm) of the tip of the mandrel or the die, and the bending speed V (unit: cm/s), it is possible to form the base steel exposure portions 201 at the desired positions of the zinc-based plating layers.

At this time, they are controlled so that t/R, which is a ratio of the sheet thickness t and the radius R of the tip portion of the mandrel or the die, satisfies the relation of 0.6 ≤ t/R ≤ 4.0. Under such processing conditions, the plating layers greatly elongate to undergo cracking of plating, making it possible to make the presence state of the base steel exposure portions 201 more favorable. Further, the wrapping speed V of the plated steel material around the mandrel or the die is set to 1 cm/s or less. By thus lowering the processing speed to the minimum, it is possible to inhibit the local occurrence of a large crack and control the size of the base steel exposure portions 201.

Hitherto, an example of the method of manufacturing the surface-treated steel material according to this embodiment has been specifically described.

### <A method of manufacturing the surface-treated member>

The surface-treated member according to this embodiment is manufactured using, as its material, the surface-treated steel material obtained in the above-described manner. Here, when parts for manufacturing the surface-treated member from the surface-treated steel material are to be obtained, it is possible to use various shaping processes, such as various forming processes and joining processes which use fastening members, such as bolts and rivets, or a welding process. By appropriately combining these processes, it is possible to manufacture the surface-treated member having a desired shape from the surface-treated steel material.

An example of the method of manufacturing the surface-treated member according to this embodiment has been briefly described above.

In the above description, the case where the base steel exposure portions 201 are formed by the flaw introduction process applied to the surface-treated steel material is described, but it should be noted that, instead of executing the flaw introduction process at the stage where the surface-treated steel material is manufactured, the flaw introduction process may be executed as part of the processing process when the surface-treated member is manufactured from the surface-treated steel material. Further, the processing process itself when the surface-treated member is manufactured from the surface-treated steel material may be used as the flaw introduction process for forming the base steel exposure portions 201.

### (Regarding Method of Manufacturing Composite Structure)

A method of manufacturing the composite structure according to this embodiment is not particularly limited. For example, the surface-treated member 1 is brought into contact with the concrete such that, in the surface-treated member 1 manufactured in the above-described manner, at least part of the exposure region 203 having the base steel exposure portions 203 is embedded in concrete.

### EXAMPLES

The following will specifically describe the surface-treated member and the composite structure according to this embodiment while presenting Examples and Comparative examples. It should be noted that the following Examples are merely presented by way of examples of the surface-treated member and the composite structure according to the present invention, and the surface-treated member and the composite structure according to the present invention are not limited to the following examples.

In the following test examples, plating substrates shown in TABLE 1 below (all are manufactured by Nippon Steel Corporation) were used, and these plating substrates were each cut into a 100 mm × 200 mm size. Thereafter, they were plated by a batch-type hot-dip plating test apparatus manufactured by our company to fabricate, for each standard, a plurality of plated steel materials whose plating layers had the compositions shown in TABLE 2 below. Note that "%" in TABLE 2 below is mass%.

### [TABLE 1]

**TABLE 1**

| | PLATING SUBSTRATE |
|---|---|
| a | COLD-ROLLED STEEL SHEET |
| b | Ni-PLATED COLD-ROLLED STEEL SHEET (Ni COATING WEIGHT: 1.0 g/m²) |

### [TABLE 2]

**TABLE 2**

| | COMPOSITION OF PLATING |
|---|---|
| A | Zn - 0.18%Al |
| B | Zn - 6.0%Al - 3.0%Mg |
| C | Zn - 11.0%Al - 3.0%Mg - 0.2%Si |
| D | Zn - 16.0%Al - 6.0%Mg - 0.2%Si |
| E | Zn - 19.0%Al - 6.0%Mg - 1.5%Sn - 0.5%Ca - 0.2%Si |
| F | Zn - 24.0%Al - 12.0%Mg - 0.5%Ca - 1.2%Si |

The above-described flaw induction process or bending process was applied to the substantially center portions of the surfaces of the plating layers of the obtained plated steel materials to form base steel exposure portions, whereby surface-treated members were formed.

When the flaw induction process was executed, linear flaws were formed in parallel using a blade sufficiently harder than the plating layers. At this time, the maximum width of the 50 µm tip range of the blade used for the flaw introduction and an interval between the parallel flaws were adjusted so that the desired base steel exposure portions were obtained. Note that, in the flaw induction process, a weight used for pressing the blade was 5 kg, and the movement speed of the blade was set to 50 cm/second. By such a flaw induction process, the base steel exposure portions whose distribution had directionality as illustrated on the upper right of the upper side in FIG. 7 were formed in the substantially center portions of the surfaces of the surface-treated members.

Further, as the bending process, a bending process using the wrapping method of JIS Z2248 (2022) was executed. At the time of the bending process, the sheet thickness t (unit: mm) of the plated steel materials, the radius R (unit: mm) of the mandrel or the die, and the bending speed V (unit: cm/s) were controlled so that the desired base steel exposure ratio was obtained. By such a bending process, the base steel exposure portions whose distribution had directionality as illustrated in the middle drawing on the upper side in FIG. 7 were formed in the substantially center portions of the surfaces of the surface-treated members.

Regarding each of the surface-treated members obtained by the above-described two kinds of processes, the length of the width of the base steel exposure portions, the number of the base steel exposure portions per unit length, the total width of the base steel exposure portions per unit length in a region A, and an area ratio of regions B were measured in conformity with the previously described method by the cross-section observation. Here, as the color reaction test, the ferroxyl test stipulated in JIS H8626 (1995) was conducted. Further, as the optical microscope, ECLIPSE LV150 manufactured by Nikon Corporation was used, and its magnification was set to 200x.

TABLE 3-1 to TABLE 3-5 below summarize the results in the case where the flaw introduction process was applied, and TABLE 4-1 to TABLE 4-5 below summarize the results in the case where the bending process was applied. Note that, in TABLE 3-1 to TABLE 4-5 below, in the column of "PLATING THICKNESS", a plating thickness per surface is shown. Further, in TABLE 3-1 to TABLE 4-5 below, in the column of "TOTAL LENGTH OF BASE STEEL EXPOSURE PORTIONS PER UNIT LENGTH", the maximum value out of a plurality of values obtained in each standard is shown.

Regarding the obtained surface-treated members, corrosion resistance was evaluated by the following test method.

### (Test Method: Evaluation of Corrosion Resistance in Concrete)

100 mm portions in terms of the major axis direction in the surface-treated members obtained in the above-described manner, the states of whose base steel exposure portions were adjusted, were embedded in concrete, and their corrosion resistance was evaluated. As the concrete, ordinary concrete prepared using ordinary Portland cement with a water-cement ratio of 64.4% was used. The cover thickness (distance from the surface of the zinc-based plating layer up to the surface of the concrete) was set to 60 mm. After they were embedded, an accelerated test (JASO M609, 30 cycles) was conducted.

The surface-treated members having undergone the above test were taken out from the concrete, and qualitative analyses for identifying constituent elements and chemical compositions were conducted on Fe-Zn-Ca-based composite layers located in interfaces between the surface-treated members and the concrete, using SEM (Scanning Electron Microscopy) and EDX (Energy Dispersive X-ray Spectroscopy) (Scanning electron microscope system SU6600 manufactured by Hitachi High Technologies Inc.). Note that, in TABLE 3-1 to TABLE 4-5 below, the unit of the chemical composition of the Fe-Zn-Ca-based composite layer is mass%, and the balance consists of H, C, O, and impurities.

The surface-treated members having undergone the above test were pickled with hydrochloric acid, whereby the zinc-based plating layers and corrosion products were removed. Thereafter, the corrosion states of the steel materials were examined by a shape measuring machine (VR-5000 manufactured by KEYENCE.). Evaluation criteria are as follows. Grades A, B, and C were considered passing. TABLE 3-1 to TABLE 4-5 below summarize the obtained results.
grade A: No pit was formed in the steel material.
B: A pit with a depth of less than 10 µm was formed in the steel material.
C: A pit with a depth of 10 µm or more and less than 50 µm was formed in the steel material.
D: A pit with a depth of 50 µm or more and less than 100 µm was formed in the steel material.
E: A pit with a depth of 100 µm or more was formed in the steel material.

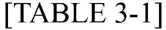

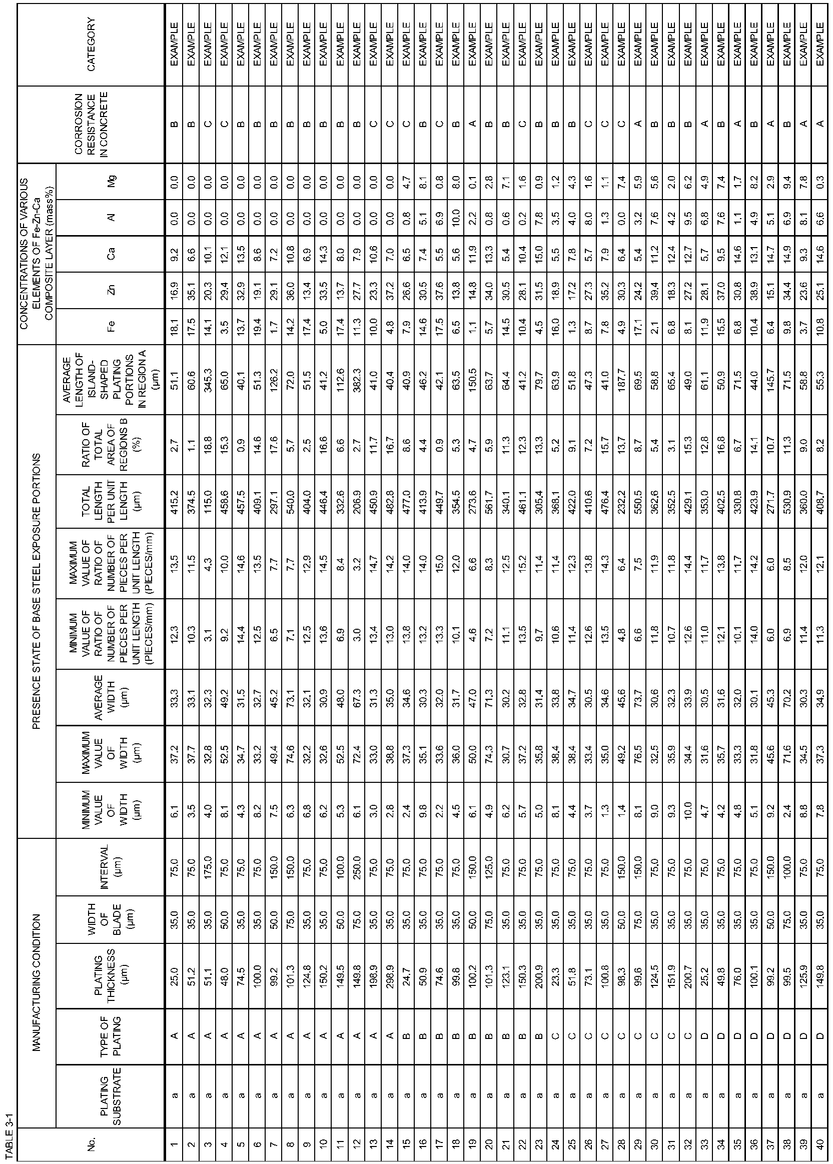

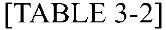

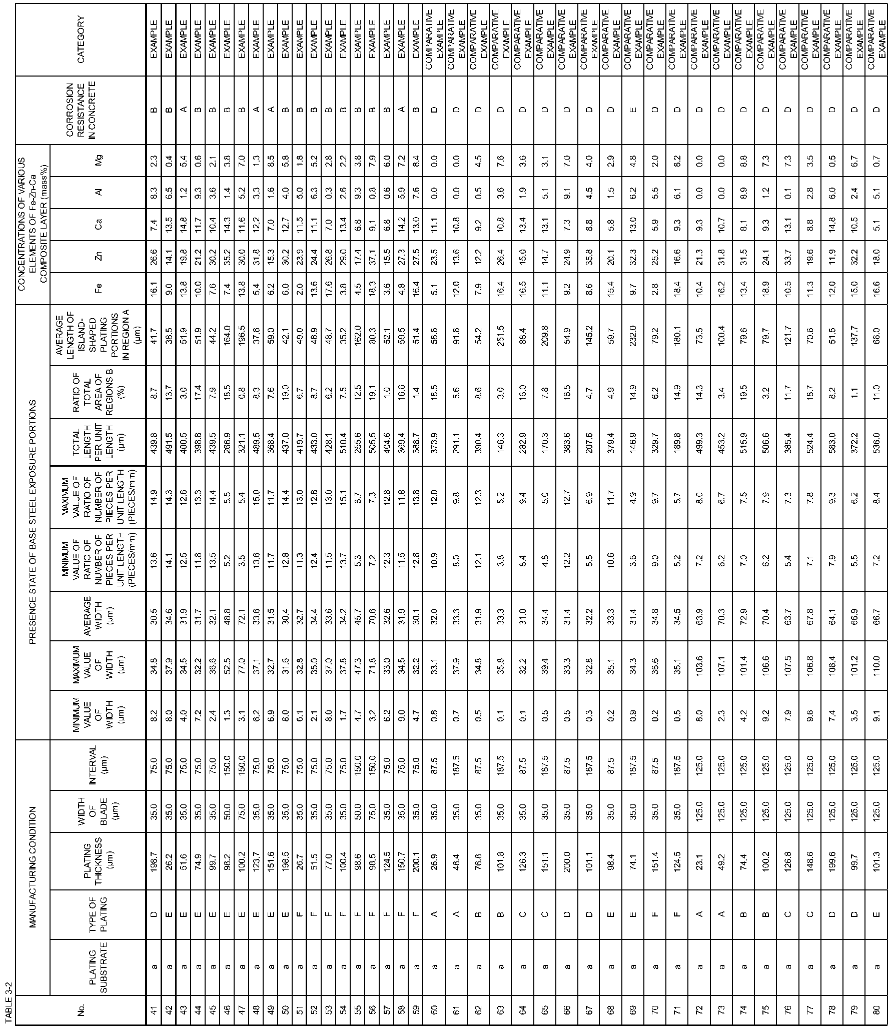

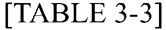

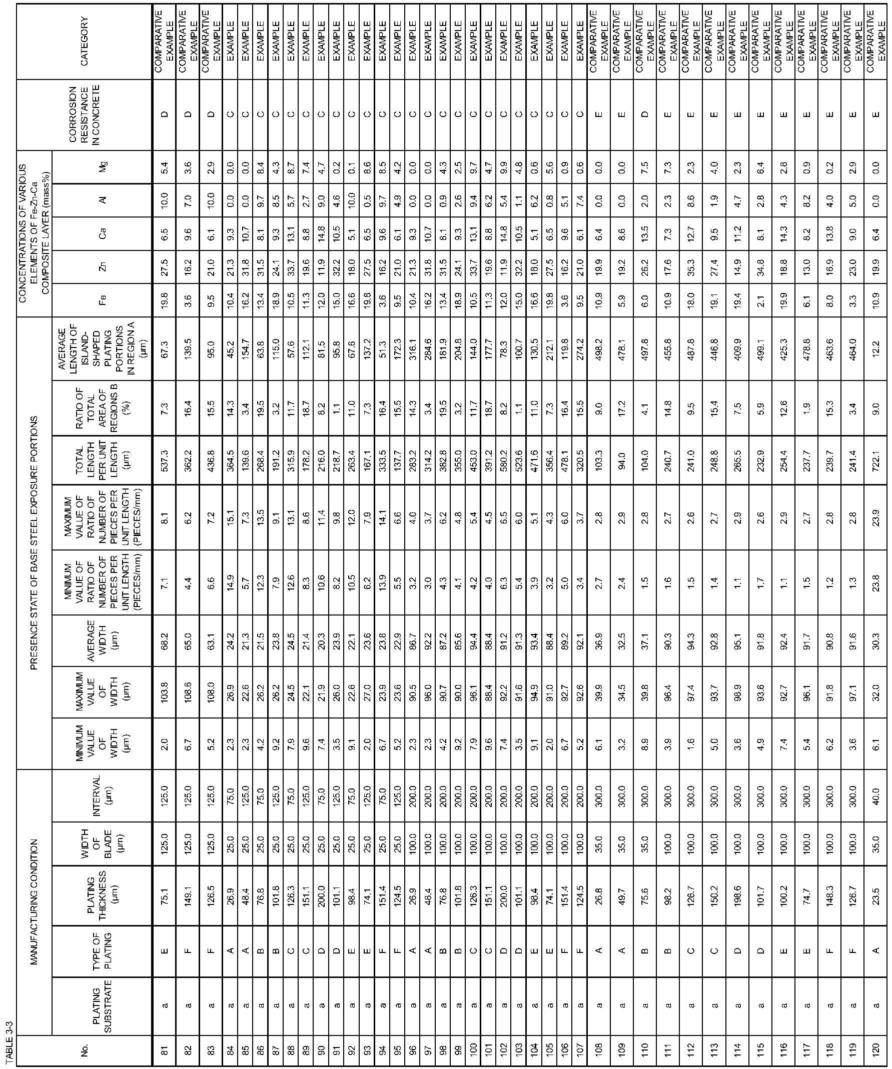

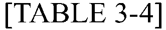

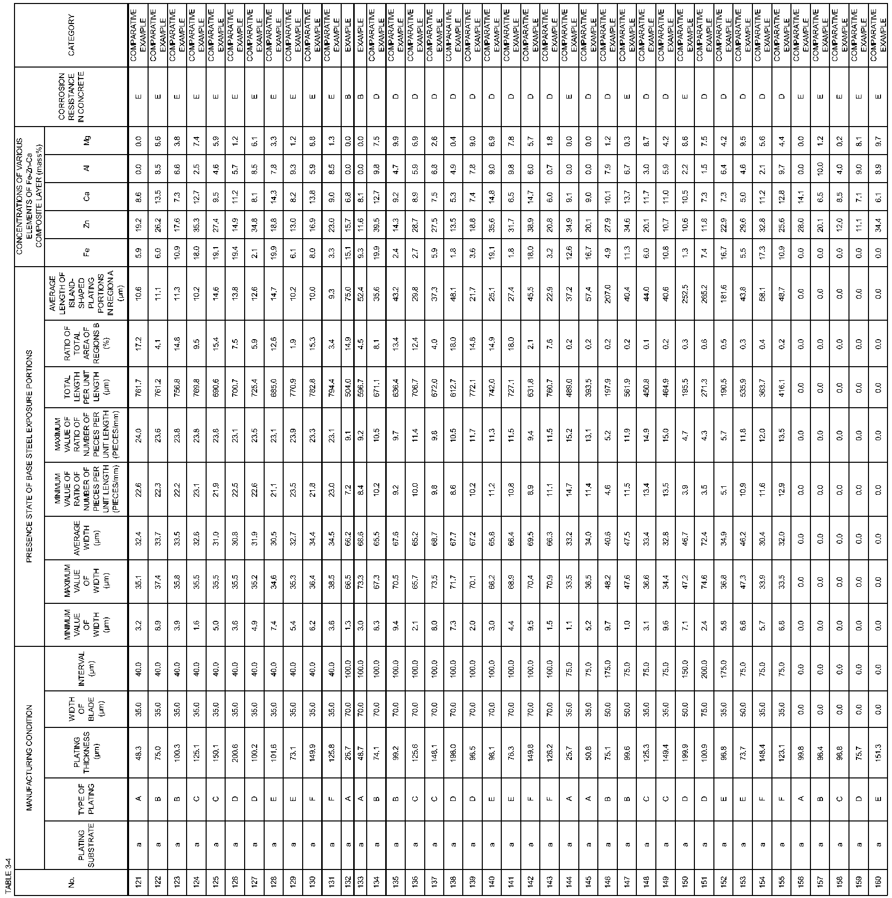

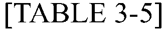

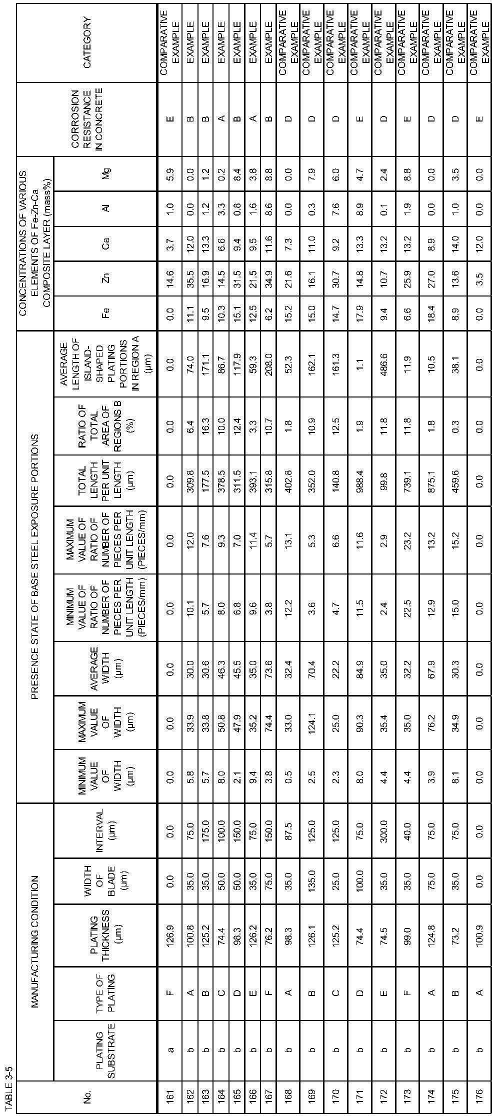

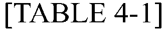

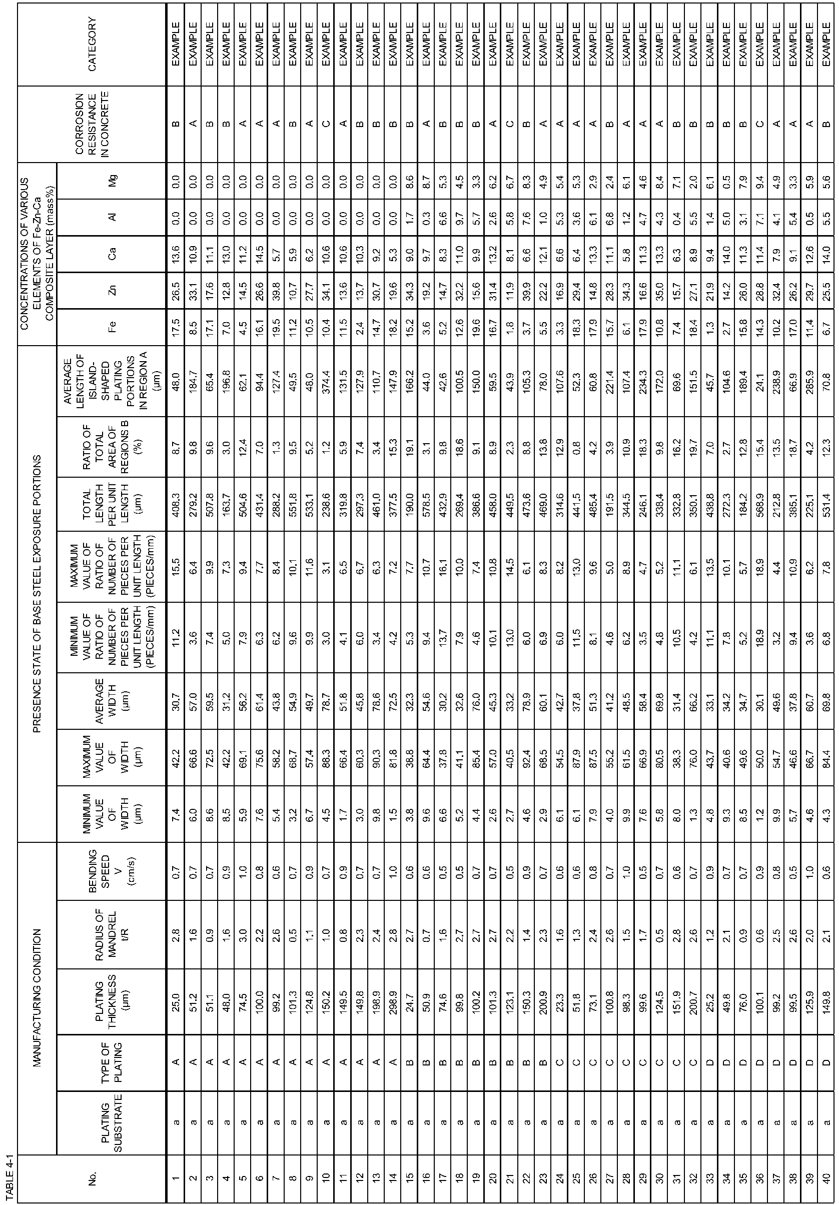

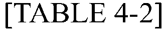

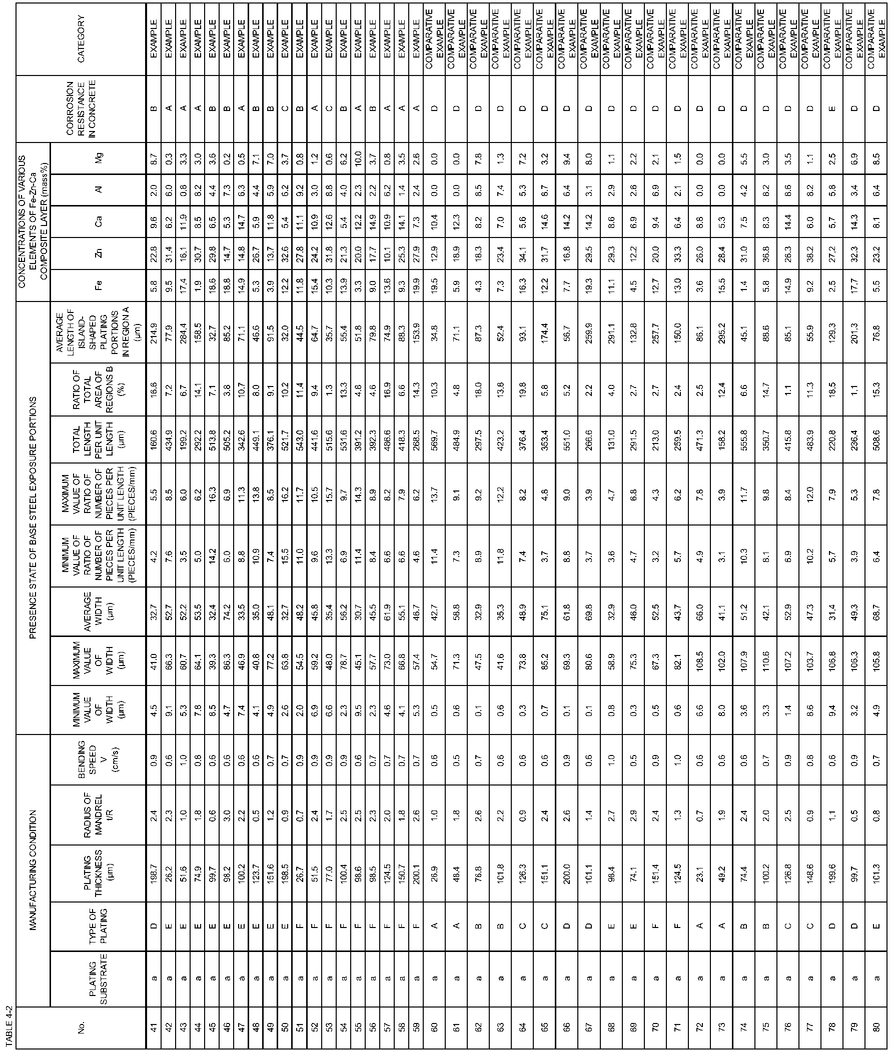

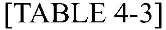

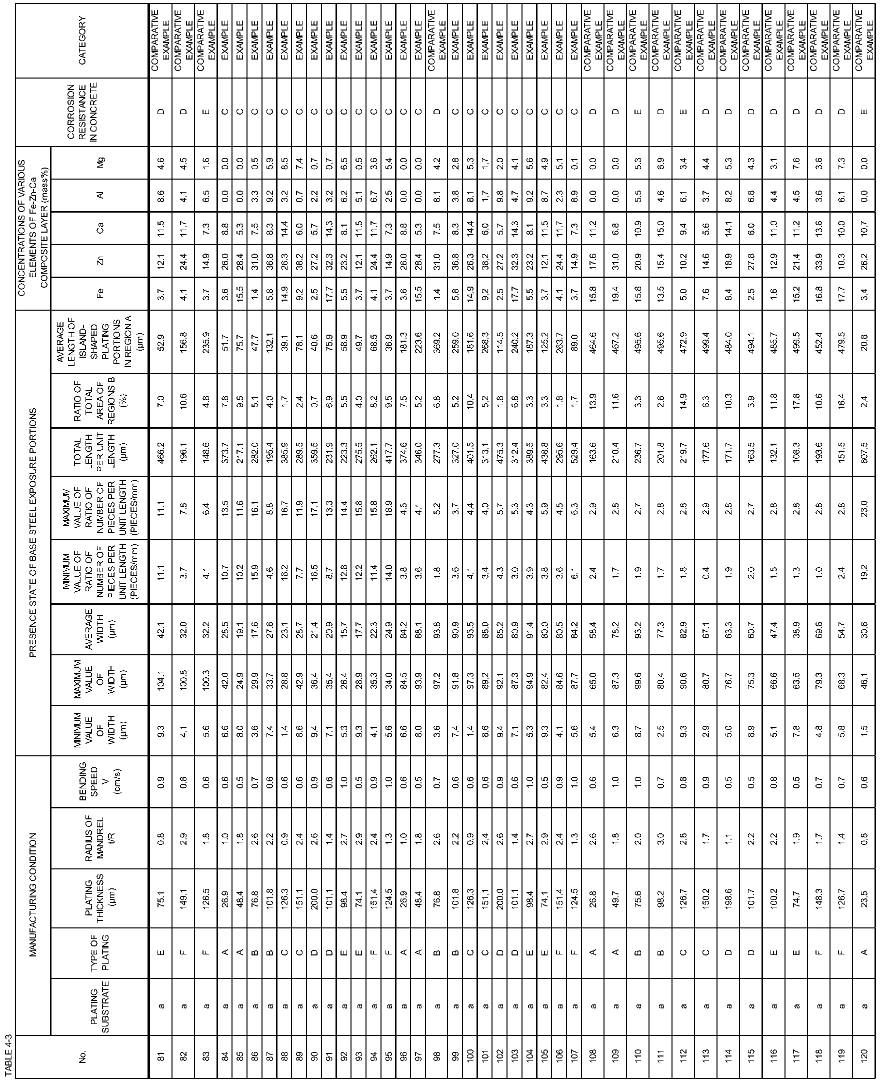

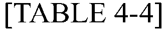

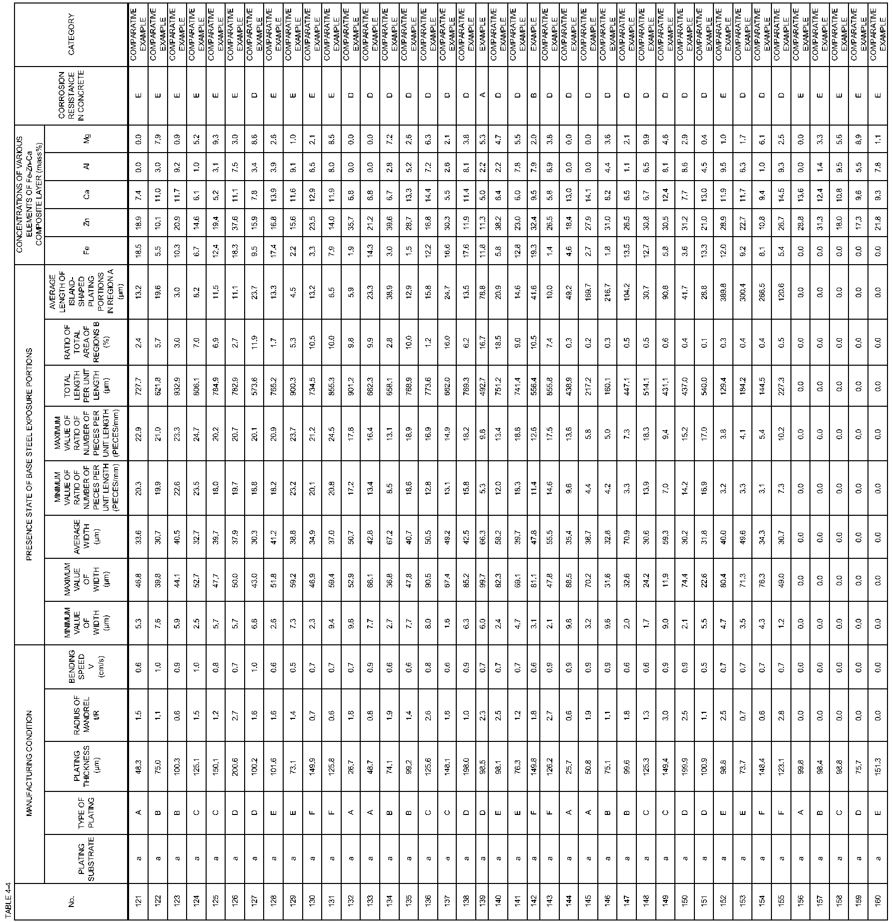

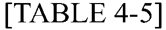

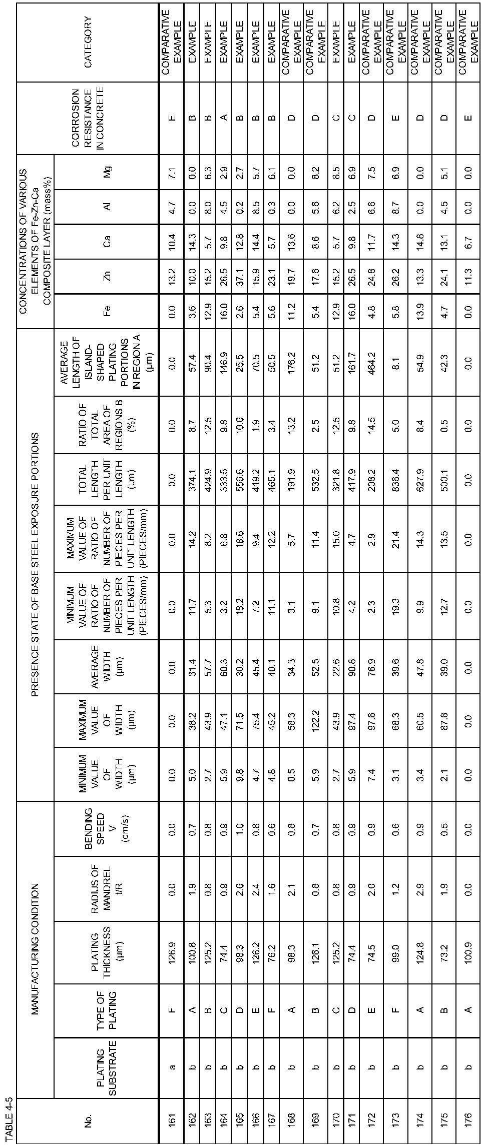

As is apparent from TABLE 3-1 to TABLE 4-5 above, the surface-treated members corresponding to Examples of the present invention exhibited excellent corrosion resistance even in the concrete, but the surface-treated members corresponding to Comparative examples of the present invention could not obtain sufficient corrosion resistance.

Although the preferred embodiments of the present invention have been described above in detail with reference to the attached drawings, the present invention is not limited to such examples. It is obvious that various modifications and alterations within the scope of the technical idea as set forth in claims are readily apparent to those having ordinary knowledge in the technical field to which the present invention belongs, and it should be understood that they also belong to the technical scope of the present invention.

The embodiments disclosed herein are presented by way of example in all respects and are not restrictive. Omissions, substitutions, and changes in various forms may be made in the above embodiments without departing from the appended claims, the later-described configurations belonging to the technical scope of the present invention, and the spirit thereof. For example, the configuration requirements of the embodiments may be arbitrarily combined within a range not impairing the effects thereof. Further, from this arbitrary combination, the operations and effects regarding the configuration requirements involved in the combination can be naturally obtained, and other operations and other effects obvious to those skilled in the art from the description herein can be obtained.

Besides, the effects described in this description are merely explanatory and illustrative and are not restrictive. In other words, the technique according to the present invention can offer other effects obvious to those skilled in the art from the description herein, in addition to the above-described effects or in place of the above-described effects.

It should be noted that the following configurations also belong to the technical scope of the present invention.
(1) A surface-treated member made of a surface-treated steel having:
   a steel material as a base metal; and
   a zinc-based plating layer located on a surface of the steel material, wherein:
      an exposure region having a base steel exposure portion, which is a portion where the surface of the steel material is exposed, is present in at least part of the zinc-based plating layer;
      in a case where an arbitrary portion with a dimension of 1.5 mm × 2.0 mm is observed with a microscope in each cross section obtained by cutting the exposure region in a thickness direction of the steel material according to a shape of the base steel exposure portion in a plan view from above the zinc-based plating layer,
      in the field of view, let a portion where a surface of the zinc-based plating layer is present with a 0.5 mm length or more along a width direction, which is a direction orthogonal to the thickness direction of the steel material, be referred to as a plating residual portion, and let a region including the base steel exposure portion, located between the two adjacent plating residual portions be defined as a region A, then in the region A, a length in the width direction, of each of the base steel exposure portions present is within a range of 1 to 100 µm, the number of the base steel exposure portions present per unit length in the width direction is within a range of 3 to 20/mm, and a total length in the width direction, of the base steel exposure portions per unit length in the width direction is 600 µm/mm or less; and
      in the exposure region, let a region giving a cross section where the total length in the width direction, of the base steel exposure portions per unit length in the width direction is 600 µm/mm or less when the cross section is observed with the microscope be defined as a region B, then a total area of the regions B in a plan view from above is 0.7% or more of a surface area of the steel material in a plan view.
(2) The surface-treated member according to (1), wherein the exposure region is at least partly embedded in concrete when the surface-treated member is used.
(3) The surface-treated member according to (1) or (2), wherein:
   the base steel exposure portion is identified by executing a color reaction test causing a color reaction at a portion where a base steel is exposed, across the whole surface of the zinc-based plating layer; and
   the identified base steel exposure portions are each virtually segmented into unit segments each being a rectangular region having 5 mm short sides or more and a 1 cm² area when the identified base steel exposure portions are each seen in a plan view from above the zinc-based plating layer, and regarding segments in each of which an area ratio of the base steel exposure portion occupying the rectangular region is 3% or more, the cross section of each of the segments is observed on a segment-by-segment basis.
(4) The surface-treated member according to any one of (1) to (3), wherein the zinc-based plating layer is a plating layer having a chemical composition containing, in mass%,
   A1: 0.10% or more and less than 40.00% and
   Mg: 0.10% or more and less than 15.00%,
   with the balance consisting of Zn and impurities.
(5) The surface-treated member according to (4), wherein the zinc-based plating layer is a plating layer containing, in mass%,
   A1: 0.10% or more and less than 40.00%,
   Mg: 0.10% or more and less than 15.00%, and
   Zn: 60.00% or more.
(6) The surface-treated member according to any one of (1) to (3), wherein the zinc-based plating layer is a plating layer having a chemical composition containing, in mass%,
   A1: 0.10% or more and less than 40.00% and
   Mg: 0.10% or more and less than 15.00%, and
      further containing one or two or more selected from a group consisting of the following element group A, element group B, element group C, element group D, element group E, and element group F, with the balance consisting of Zn and impurities.
   [element group A]: one or two selected from a group consisting of Si: 2.50% or less and Fe: 5.00% or less
   [element group B]: one or two or more selected from a group consisting of Sb: less than 0.50%, Pb: less than 0.50%, and Sr: less than 0.50%
   [element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
   [element group D]: one or two or more selected from a group consisting of Sn: 20.00% or less, Bi: less than 5.00%, and In: less than 2.00%
   [element group E]: one or two or more selected from a group consisting of Ca: 3.00% or less, La: less than 0.50%, Ce: less than 0.50%, and Y: 0.50% or less
   [element group F]: B: less than 0.50%
(7) The surface-treated member according to (6), containing the element group A.
(8) The surface-treated member according to (6), containing the element group B.
(9) The surface-treated member according to (6), containing the element group C.
(10) The surface-treated member according to (6), containing the element group D.
(11) The surface-treated member according to (6), containing the element group E.
(12) The surface-treated member according to (6), containing the element group F.
(13) The surface-treated member according to any one of (6) to (12), wherein the zinc-based plating layer is a plating layer containing, in mass%, at least
   Al: 4.0% or more and less than 25.0% and
   Mg: 0.3% or more and less than 12.5%.
(14) A composite structure of a surface-treated member and a concrete, the surface-treated member being made of a surface-treated steel material having a steel material as a base metal and a zinc-based plating layer located on a surface of the steel material, wherein:
   an exposure region having a base steel exposure portion, which is a portion where the surface of the steel material is exposed, is present in at least part of the zinc-based plating layer, and at least part of the exposure region is in contact with the concrete;
   in a case where an arbitrary portion with a dimension of 1.5 mm × 2.0 mm is observed with a microscope in each cross section obtained by cutting the exposure region in a thickness direction of the steel material according to a shape of the base steel exposure portion in a plan view from above the zinc-based plating layer,
   in the field of view, let a portion where a surface of the zinc-based plating layer is present with a 0.5 mm length or more along a width direction, which is a direction orthogonal to the thickness direction of the steel material, be referred to as a plating residual portion, and let a region including the base steel exposure portion, located between the two adjacent plating residual portions be defined as a region A, then in the region A, a length in the width direction, of each of the base steel exposure portions present is within a range of 1.0 to 100.0 µm, the number of the base steel exposure portions present per unit length in the width direction is within a range of 3.0 to 20.0/mm, and a total length in the width direction, of the base steel exposure portions per unit length in the width direction is 600.0 µm/mm or less; and
   in the exposure region, let a region giving a cross section where the total length in the width direction, of the base steel exposure portions per unit length in the width direction is 600.0 µm/mm or less when the cross section is observed with the microscope be defined as a region B, then a total area of the regions B in a plan view from above is 0.7% or more of a surface area of the steel material in a plan view.
(15) The composite structure according to (14), wherein, in the exposure region in contact with the concrete, an Fe-Zn-Ca-based composite layer containing Fe, Zn, and Ca is present in at least part of an interface between the zinc-based plating layer and the concrete or an interface between the steel material and the concrete.
(16) The composite structure according to (15), wherein the Fe-Zn-Ca-based composite layer is a layer having a chemical composition containing, in mass%,
   Fe: 1.0% or more and 20.0% or less,
   Zn: 10.0% or more and 40.0% or less, and
   Ca: 5.0% or more and 15.0% or less,
   with the balance consisting of H, C, O, and impurities.
(17) The composite structure according to (16), wherein:
   the zinc-based plating layer further contains Al and Mg as the chemical composition; and
   in place of part of H, C, and O in the balance, the chemical composition of the Fe-Zn-Ca-based composite layer further contains at least one of
   A1: 0% or more and 10.0% or less and
   Mg: 0% or more and 10.0% or less.
(18) The composite structure according to any one of (14) to (17), wherein:
   the base steel exposure portion is identified by executing a color reaction test causing a color reaction in a portion where a base steel is exposed, across the whole surface of the zinc-based plating layer; and
   the identified base steel exposure portions are each virtually segmented into unit segments each being a rectangular region having 5 mm short sides or more and a 1 cm² area when the identified base steel exposure portions are each seen in a plan view from above the zinc-based plating layer, and regarding segments in each of which an area ratio of the base steel exposure portion occupying the rectangular region is 3% or more, the cross section of each of the segments is observed on a segment-by-segment basis.
(19) The composite structure according to any one of (14) to (18), wherein the zinc-based plating layer is a plating layer having a chemical composition containing, in mass%,
   A1: 0.10% or more and less than 40.00% and
   Mg: 0.10% or more and less than 15.00%,
   with the balance consisting of Zn and impurities.
(20) The composite structure according to (19), wherein the zinc-based plating layer is a plating layer containing, in mass%,
   A1: 0.10% or more and less than 40.00%,
   Mg: 0.10% or more and less than 15.00%, and
   Zn: 60.00% or more.
(21) The composite structure according to any one of (14) to (18), wherein the zinc-based plating layer is a plating layer having a chemical composition containing, in mass%,
   A1: 0.10% or more and less than 40.00% and
   Mg: 0.10% or more and less than 15.00%, and
      further containing one or two or more selected from a group consisting of the following element group A, element group B, element group C, element group D, element group E, and element group F, with the balance consisting of Zn and impurities.
   [element group A]: one or two selected from a group consisting of Si: 2.50% or less and Fe: 5.00% or less
   [element group B]: one or two or more selected from a group consisting of Sb: less than 0.50%, Pb: less than 0.50%, and Sr: less than 0.50%
   [element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
   [element group D]: one or two or more selected from a group consisting of Sn: 20.00% or less, Bi: less than 5.00%, and In: less than 2.00%
   [element group E]: one or two or more selected from a group consisting of Ca: 3.00% or less, La: less than 0.50%, Ce: less than 0.50%, and Y: 0.50% or less
   [element group F]: B: less than 0.50%.
(22) The composite structure according to (21), containing the element group A.
(23) The composite structure according to (21), containing the element group B.
(24) The composite structure according to (21), containing the element group C.
(25) The composite structure according to (21), containing the element group D.
(26) The composite structure according to (21), containing the element group E.
(27) The composite structure according to (21), containing the element group F.
(28) The composite structure according to any one of (21) to (27), wherein the zinc-based plating layer is a plating layer containing, in mass%, at least
   Al: 4.0% or more and less than 25.0% and
   Mg: 0.3% or more and less than 12.5%.

### EXPLANATION OF CODES

- 1: surface-treated member
- 5: composite structure
- 10: steel material
- 20: zinc-based plating layer
- 50: Fe-Zn-Ca-based composite layer
- 201: base steel exposure portion
- 203: exposure region

## Claims

1. A surface-treated member made of a surface-treated steel material having:
a steel material as a base metal; and
a zinc-based plating layer located on a surface of the steel material, wherein:
an exposure region having a base steel exposure portion, which is a portion where the surface of the steel material is exposed, is present in at least part of the zinc-based plating layer;
in a case where an arbitrary portion with a dimension of 1.5 mm × 2.0 mm is observed with a microscope in each cross section obtained by cutting the exposure region in a thickness direction of the steel material according to a shape of the base steel exposure portion in a plan view from above the zinc-based plating layer,
in the field of view, let a portion where a surface of the zinc-based plating layer is present with a 0.5 mm length or more along a width direction, which is a direction orthogonal to the thickness direction of the steel material, be referred to as a plating residual portion, and let a region including the base steel exposure portion, located between the two adjacent plating residual portions be defined as a region A, then in the region A, a length in the width direction, of each of the base steel exposure portions present is within a range of 1.0 to 100.0 µm, the number of the base steel exposure portions present per unit length in the width direction is within a range of 3.0 to 20.0/mm, and a total length in the width direction, of the base steel exposure portions per unit length in the width direction is 600.0 µm/mm or less; and
in the exposure region, let a region giving a cross section where the total length in the width direction, of the base steel exposure portions per unit length in the width direction when the cross section is observed with the microscope is 600.0 µm/mm or less be defined as a region B, then a total area of the regions B in a plan view from above is 0.7% or more of a surface area of the steel material in a plan view.

2. The surface-treated member according to claim 1, wherein the exposure region is at least partly embedded in concrete when the surface-treated member is used.

3. The surface-treated member according to claim 1, wherein:
the base steel exposure portion is identified by executing a color reaction test causing a color reaction at a portion where a base steel is exposed, across the whole surface of the zinc-based plating layer; and
the identified base steel exposure portions are each virtually segmented into unit segments each being a rectangular region having 5 mm short sides or more and a 1 cm² area when the identified base steel exposure portions are each seen in a plan view from above the zinc-based plating layer, and regarding segments in each of which an area ratio of the base steel exposure portion occupying the rectangular region is 3% or more, the cross section of each of the segments is observed on a segment-by-segment basis.

4. The surface-treated member according to any one of claims 1 to 3, wherein the zinc-based plating layer is a plating layer having a chemical composition containing, in mass%,
A1: 0.10% or more and less than 40.00% and
Mg: 0.10% or more and less than 15.00%,
with the balance consisting of Zn and impurities.

5. The surface-treated member according to claim 4, wherein the zinc-based plating layer is a plating layer containing, in mass%,
A1: 0.10% or more and less than 40.00%,
Mg: 0.10% or more and less than 15.00%, and
Zn: 60.00% or more.

6. The surface-treated member according to any one of claims 1 to 3, wherein the zinc-based plating layer is a plating layer having a chemical composition containing, in mass%,
A1: 0.10% or more and less than 40.00% and
Mg: 0.10% or more and less than 15.00%, and
further containing one or two or more selected from a group consisting of the following element group A, element group B, element group C, element group D, element group E, and element group F, with the balance consisting of Zn and impurities.
[element group A]: one or two selected from a group consisting of Si: 2.50% or less and Fe: 5.00% or less
[element group B]: one or two or more selected from a group consisting of Sb: less than 0.50%, Pb: less than 0.50%, and Sr: less than 0.50%
[element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
[element group D]: one or two or more selected from a group consisting of Sn: 20.00% or less, Bi: less than 5.00%, and In: less than 2.00%
[element group E]: one or two or more selected from a group consisting of Ca: 3.00% or less, La: less than 0.50%, Ce: less than 0.50%, and Y: 0.50% or less
[element group F]: B: less than 0.50%

7. The surface-treated member according to claim 6, containing the element group A.

8. The surface-treated member according to claim 6, containing the element group B.

9. The surface-treated member according to claim 6, containing the element group C.

10. The surface-treated member according to claim 6, containing the element group D.

11. The surface-treated member according to claim 6, containing the element group E.

12. The surface-treated member according to claim 6, containing the element group F.

13. The surface-treated member according to claim 6, wherein the zinc-based plating layer is a plating layer containing, in mass%, at least
Al: 4.0% or more and less than 25.0% and
Mg: 0.3% or more and less than 12.5%.

14. A composite structure of a surface-treated member and concrete, the surface-treated member being made of a surface-treated steel material having a steel material as a base metal and a zinc-based plating layer located on a surface of the steel material, wherein:
an exposure region having a base steel exposure portion, which is a portion where the surface of the steel material is exposed, is present in at least part of the zinc-based plating layer, and at least part of the exposure region is in contact with the concrete; and
in a case where an arbitrary portion with a dimension of 1.5 mm × 2.0 mm is observed with a microscope in each cross section obtained by cutting the exposure region in a thickness direction of the steel material according to a shape of the base steel exposure portion in a plan view from above the zinc-based plating layer,
in the field of view, let a portion where a surface of the zinc-based plating layer is present with a 0.5 mm length or more along a width direction, which is a direction orthogonal to the thickness direction of the steel material, be referred to as a plating residual portion, and let a region including the base steel exposure portion, located between the two adjacent plating residual portions be defined as a region A, then in the region A, a length in the width direction, of each of the base steel exposure portions present is within a range of 1.0 to 100.0 µm, the number of the base steel exposure portions present per unit length in the width direction is within a range of 3.0 to 20.0/mm, and a total length in the width direction, of the base steel exposure portions per unit length in the width direction is 600.0 µm/mm or less; and
in the exposure region, let a region giving a cross section where the total length in the width direction, of the base steel exposure portions per unit length in the width direction is 600.0 µm/mm or less when the cross section is observed with the microscope be defined as a region B, then a total area of the regions B in a plan view from above is 0.7% or more of a surface area of the steel material in a plan view.

15. The composite structure according to claim 14, wherein, in the exposure region in contact with the concrete, an Fe-Zn-Ca-based composite layer containing Fe, Zn, and Ca is present in at least part of an interface between the zinc-based plating layer and the concrete or an interface between the steel material and the concrete.

16. The composite structure according to claim 15, wherein the Fe-Zn-Ca-based composite layer is a layer having a chemical composition containing, in mass%,
Fe: 1.0% or more and 20.0% or less,
Zn: 10.0% or more and 40.0% or less, and
Ca: 5.0% or more and 15.0% or less,
with the balance consisting of H, C, O, and impurities.

17. The composite structure according to claim 16, wherein:
the zinc-based plating layer further contains Al and Mg as the chemical composition; and
in place of part of H, C, and O in the balance, the chemical composition of the Fe-Zn-Ca-based composite layer further contains at least one of
A1: 0% or more and 10.0% or less and
Mg: 0% or more and 10.0% or less.

18. The composite structure according to claim 14, wherein:
the base steel exposure portion is identified by executing a color reaction test causing a color reaction at a portion where a base steel is exposed, across the whole surface of the zinc-based plating layer; and
the identified base steel exposure portions are each virtually segmented into unit segments each being a rectangular region having 5 mm short sides or more and a 1 cm² area when the identified base steel exposure portions are each seen in a plan view from above the zinc-based plating layer, and regarding segments in each of which an area ratio of the base steel exposure portion occupying the rectangular region is 3% or more, the cross section of each of the segments is observed on a segment-by-segment basis.

19. The composite structure according to any one of claims 14 to 18, wherein the zinc-based plating layer is a plating layer having a chemical composition containing, in mass%,
A1: 0.10% or more and less than 40.00% and
Mg: 0.10% or more and less than 15.00%,
with the balance consisting of Zn and impurities.

20. The composite structure according to claim 19, wherein the zinc-based plating layer is a plating layer containing, in mass%,
A1: 0.10% or more and less than 40.00%,
Mg: 0.10% or more and less than 15.00%, and
Zn: 60.00% or more.

21. The composite structure according to any one of claims 14 to 18, wherein the zinc-based plating layer is a plating layer having a chemical composition containing, in mass%,
A1: 0.10% or more and less than 40.00% and
Mg: 0.10% or more and less than 15.00%, and
further containing one or two or more selected from a group consisting of the following element group A, element group B, element group C, element group D, element group E, and element group F, with the balance consisting of Zn and impurities.
[element group A]: one or two selected from a group consisting of Si: 2.50% or less and Fe: 5.00% or less
[element group B]: one or two or more selected from a group consisting of Sb: less than 0.50%, Pb: less than 0.50%, and Sr: less than 0.50%
[element group C]: one or two or more selected from a group consisting of Cu: less than 0.25%, Ti: less than 0.25%, Cr: less than 0.25%, Nb: less than 0.25%, Ni: less than 0.25%, Mn: less than 0.25%, Co: less than 0.25%, and V: less than 0.25%
[element group D]: one or two or more selected from a group consisting of Sn: 20.00% or less, Bi: less than 5.00%, and In: less than 2.00%
[element group E]: one or two or more selected from a group consisting of Ca: 3.00% or less, La: less than 0.50%, Ce: less than 0.50%, and Y: 0.50% or less
[element group F]: B: less than 0.50%.

22. The composite structure according to claim 21, containing the element group A.

23. The composite structure according to claim 21, containing the element group B.

24. The composite structure according to claim 21, containing the element group C.

25. The composite structure according to claim 21, containing the element group D.

26. The composite structure according to claim 21, containing the element group E.

27. The composite structure according to claim 21, containing the element group F.

28. The composite structure according to claim 21, wherein the zinc-based plating layer is a plating layer containing, in mass%, at least
Al: 4.0% or more and less than 25.0% and
Mg: 0.3% or more and less than 12.5%.
